# EUROPEAN PATENT SPECIFICATION

(11) **EP 4 287 161 B1**
(45) Date of publication and mention of the grant of the patent: **01.07.2026**
(21) Application number: 23203944.6
(22) Date of filing: 15.05.2019
(51) Int. Cl.: G08G 1/16, H04W 4/40, B60W 40/08, G08B 3/10, G08B 21/06, B60W 50/14

(54) **DRIVING ASSISTANCE METHOD AND DRIVING ASSISTANCE SYSTEM**
FAHRASSISTENZVERFAHREN UND FAHRASSISTENZSYSTEM
PROCÉDÉ ET SYSTÈME D'AIDE À LA CONDUITE

(43) Date of publication of application: 06.12.2023
(62) Divisional of application: 19928310.2
(73) Proprietor: NISSAN MOTOR CO., LTD., Kanagawa 221-0023 (JP)
(72) Inventor: HATA, Akihiko, Atsugi-shi, 243-0123 (JP); UEDA, Kei, Atsugi-shi, 243-0123 (JP)
(74) Representative: Grünecker Patent- und Rechtsanwälte PartG mbB

(56) References cited:
- US-A1- 2018 141 570

## Description

### TECHNICAL FIELD

The present disclosure relates to a driving assistance method and a driving assistance system.

### BACKGROUND ART

JP 2018-151765 A discloses a visual recognition assistance device that issues a warning when a driver does not visually observe a part to be monitored for a predetermined time. The device detects an object present around a vehicle by a vehicle exterior camera, specifies a type of the detected object, and detects a visual state of the driver by an in-vehicle camera. Then, based on the type of the object and the visual state of the driver, the device determines whether or not a visual observation of the driver is appropriate, and issues a warning when determining that the visual observation of the driver is inappropriate.

US 2018/141570 A1 iscloses a vehicle system for autonomous driving that monitors driver attention and steering wheel holding, presents visual alerts via a head-up display when traffic changes, and escalates to vibration and sound warnings if the driver is inattentive, potentially decelerating, stopping the vehicle, or terminating autonomous driving.

### SUMMARY OF INVENTION

However, it is difficult to determine whether or not a warning is necessary by detecting a part to be visually observed by the vehicle exterior camera and a visual part of the driver by the in-vehicle camera to determine whether or not the visual observation is appropriate. Furthermore, if whether or not a warning is necessary is determined only by an orientation of the face or eyes of the driver detected by the in-vehicle camera, an unnecessary warning may be issued.

In view of the above problems, an object of the present disclosure is to provide a driving assistance method and a driving assistance system capable of reducing an unnecessary warning by a simple method.

This is achieved by the features of the independent claims.

### BRIEF DESCRIPTION OF DRAWINGS

FIG. 1 is a schematic configuration diagram of a driving assistance system according to the present embodiment.
FIG. 2 is a flowchart illustrating vehicle speed control according to the present embodiment.
FIG. 3 is a flowchart illustrating lane center keeping control according to the present embodiment.
FIG. 4 is a diagram illustrating lane change control started with a direction indicator operation performed by a driver as a trigger.
FIG. 5 is a flowchart illustrating the lane change control started with the direction indicator operation performed by the driver as the trigger.
FIG. 6 is a diagram illustrating lane change control based on an overtaking assistance function.
FIG. 7 is a flowchart illustrating the lane change control based on the overtaking assistance function.
FIG. 8 is a diagram illustrating lane change control based on a route travel assistance function.
FIG. 9 is a flowchart illustrating the lane change control based on the route travel assistance function.
FIG. 10 is a diagram illustrating an example of a warning screen of a forward looking alert.
FIG. 11 is a flowchart illustrating control of a notification operation of the forward looking alert.
FIG. 12 is a diagram illustrating an example of a warning screen of a primary hands-on alert.
FIG. 13 is a diagram illustrating an example of a warning screen of a secondary hands-on alert.
FIG. 14 is a flowchart illustrating control of a notification operation of a hands-on alert that is started when a mode is switched to a hands-on mode.
FIG. 15 is a flowchart illustrating control of a notification operation of a hands-on alert that is started when the forward looking alert is notified in a hands-off mode.

### DESCRIPTION OF EMBODIMENTS

Hereinafter, embodiments of the present disclosure are described with reference to drawings and the like.

### (First Embodiment)

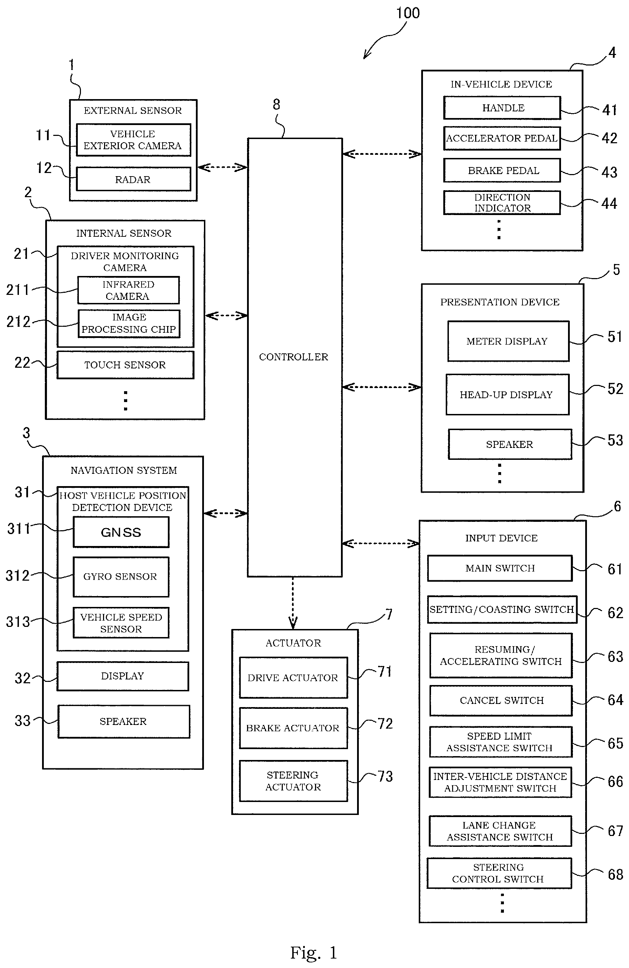

FIG. 1 is a schematic configuration diagram of a driving assistance system 100 according to a first embodiment.

As illustrated in FIG. 1, the driving assistance system 100 according to this embodiment includes an external sensor 1, an internal sensor 2, a navigation system 3, an in-vehicle device 4, a presentation device 5, an input device 6, an actuator 7, and a controller 8. The driving assistance system 100 is mounted on a vehicle (a host vehicle) 10 having an autonomous driving function.

The external sensor 1 is a detection device that detects an external situation that is surrounding information of the host vehicle 10. The external sensor 1 detects, for example, other vehicles around the host vehicle 10, a lane marker, a road type (an expressway, a general road, and the like), and the like. The external sensor 1 includes a vehicle exterior camera 11 and a radar 12.

The vehicle exterior camera 11 is an imaging device that images an external situation of the host vehicle 10 and acquires imaging information on the external situation of the host vehicle 10. The vehicle exterior camera 11 is, for example, around view monitor cameras provided on vehicle exterior sides of front, rear, and left and right doors of the host vehicle 10, a front camera provided on a vehicle exterior or interior side of a windshield, and a rear camera provided on a rear of the host vehicle 10.

The radar 12 detects an object outside the host vehicle 10 using radio waves. The radio waves are, for example, millimeter waves. More specifically, the radar 12 transmits radio waves to surroundings of the host vehicle 10 and receives radio waves reflected by an object to detect the object. The radar 12 can acquire, for example, a distance or a direction to the object as object information.

The external sensor 1 outputs the acquired surrounding information (imaging information and object information) of the host vehicle 10 to the controller 8.

The internal sensor 2 is a detection device that detects a state of a driver. The internal sensor 2 includes a driver monitoring camera 21, a touch sensor 22, and the like.

The driver monitoring camera 21 is a monitor unit that images a state of a driver and performs image processing, and detects an orientation of a face and an open/closed state of eyes of the driver during traveling. The driver monitoring camera 21 is, for example, an infrared camera unit installed on a dashboard of the host vehicle 10, and includes an infrared camera 211 including an LED emitting infrared light, an optical filter, a lens, and an image sensor, and an image processing chip 212.

The infrared camera 211 images the face of the driver. The image processing chip 212 extracts organs (eyes, a nose, and a mouth) on the face of the driver from a driver image of the infrared camera 211 by pattern matching, and determines the orientation of the face of the driver based on sizes and a positional relation of the organs on the face. The image processing chip 212 acquires the determined orientation of the face of the driver as facial recognition information. Further, the image processing chip 212 determines the open/closed state of the eyes based on an image of peripheries of the eyes of the driver and also acquires open/closed state information as the facial recognition information.

The touch sensor 22 is a detection device (a detection unit) that detects that the driver keeps hands on a handle. The touch sensor 22 is provided on the handle, and detects that the driver keeps the hands on the handle by a capacitance sensor. The touch sensor 22 acquires, as handle grasping information, whether or not it is detected that the driver keeps the hands on the handle.

In addition, the internal sensor 2 may include, for example, a seating sensor that detects that the driver is seated with a weight sensor and a seat belt sensor that detects that a seat belt is locked.

The internal sensor 2 outputs the acquired facial recognition information and handle grasping information to the controller 8 as driver state information.

The navigation system 3 is a device that guides the driver to a destination set on a map by the driver or the like. The navigation system 3 includes a host vehicle position detection device 31, a display 32, a speaker 33, and the like.

The host vehicle position detection device 31 is a device that acquires position information of the host vehicle 10, and includes a GPS receiver (GNSS) 311, a gyro sensor 312, a vehicle speed sensor 313, and the like. The GPS receiver 311 periodically receives a signal (GPS data) transmitted from a GPS satellite. The gyro sensor 312 detects a direction of the host vehicle 10. The vehicle speed sensor 313 detects a vehicle speed of the host vehicle 10.

The host vehicle position detection device 31 outputs the received GPS data and the detected direction and vehicle speed of the host vehicle 10 to the controller 8 as the position information of the host vehicle 10. The controller 8 constantly grasps a correct current position, vehicle speed, and traveling direction of the host vehicle 10 based on the received position information of the host vehicle 10. Further, the controller 8 calculates a target route to a destination of the host vehicle 10 based on the current position and traveling direction of the host vehicle 10 and map information of a map database (not illustrated). The calculated target route is transmitted to the display 32 and the speaker 33 as navigation information. The map database includes speed limit information of a road, and the navigation system 3 acquires information on the speed limit of the road on which the host vehicle 10 is traveling, and outputs the information to the controller 8.

The display 32 and the speaker 33 are devices that perform notification of target route information to the driver. The display 32 displays the target route information based on the navigation information from the controller 8. The speaker 33 outputs the target route information by voice based on the navigation information from the controller 8.

The navigation system 3 may use information stored in a computer of a facility outside a vehicle, such as an information processing center capable of communicating with the host vehicle 10. For example, the navigation system 3 may acquire, as the navigation information, congestion information, indicating road congestion and speed limit information of a road, from the computer of the facility via communication. The processing executed by the navigation system 3 may be distributed and executed by a computer mounted on the host vehicle 10 and a computer outside the vehicle.

The in-vehicle device 4 includes various devices mounted on the vehicle and operates by an operation of the driver. The in-vehicle device 4 includes a steering wheel (a handle) 41, an accelerator pedal 42, a brake pedal 43, and the like. When the in-vehicle device 4 is operated by the driver, operation information thereof is output to the controller 8. When the controller 8 receives the operation information from the in-vehicle device 4, the controller 8 transmits a command based on the operation information to the actuator 7 described later, and the actuator 7 executes traveling control of the host vehicle 10 based on the command from the controller 8.

The in-vehicle device 4 further includes devices such as a direction indicator 44, an audio device, an air conditioner, a hands free switch, a power window, a wiper, a light, and a horn. When these devices are operated by the driver, operation information thereof is output to the controller 8.

In autonomous driving control (driving assistance control) described later, the in-vehicle device 4 such as the direction indicator 44 can be automatically operated and stopped according to the command from the controller 8 regardless of the operation of the driver.

The presentation device 5 is a device that notifies the driver of various notification information based on the control of the controller 8, which will be described later. The presentation device 5 includes a meter display 51, a head-up display 52, a speaker 53, and the like.

The meter display 51 is a display device incorporated in a meter unit and displays various notification information for the driver. The notification information includes traveling state information of the vehicle and warning information. As the traveling state information of the vehicle, for example, the vehicle speed, fuel cost, and a cruising distance of the host vehicle 10, ON/OFF of the autonomous driving control, a type of a driving control mode, a speed limit sign, a situation of other vehicles around the host vehicle 10, and lane information of the vicinity of the host vehicle 10 are displayed. As the warning information, for example, a forward looking alert, a hands-on alert, and an approach alert are displayed. The forward looking alert is displayed when it is determined that the driver is not watching ahead. The hands-on alert is displayed when it is detected that the driver releases the hands from the handle in a hands-on mode described later. The approach alert is displayed when it is determined that there is a risk of collision with another vehicle ahead. Details of the warning information will be described later.

The head-up display 52 is a display device that displays various notification information for the driver on the windshield. The notification information includes the traveling state information of the vehicle and the warning information. The head-up display 52 displays information similar to that of the meter display 51 more easily.

The speaker 53 is a notification device that outputs various notification information to the driver by voice. The speaker 53 notifies the driver of a lane change or various warning information during travelling of autonomous driving, for example, by voice.

The input device 6 is a switch operated by the driver and is provided, for example, at a position on the steering wheel where the driver can easily operate the input device 6. The input device 6 includes a main switch 61, a setting/coasting switch 62, a resuming/accelerating switch 63, a cancel switch 64, a speed limit assistance switch 65, an inter-vehicle distance adjustment switch 66, a lane change assistance switch 67, a steering control switch 68, and the like.

The main switch 61 is a selector switch that switches power ON/OFF of the driving assistance system 100.

The setting/coasting switch 62 is a switch that starts vehicle speed control and reduces a set vehicle speed.

The resuming/accelerating switch 63 is a switch that has both a resuming operation of resuming an operation at the set vehicle speed before release and an acceleration operation of increasing the set vehicle speed after the vehicle speed control is released.

The cancel switch 64 is a switch that releases operations of various types of control related to the autonomous driving, such as vehicle speed control and steering control.

The speed limit assistance switch 65 is a switch that automatically sets a target vehicle speed to a speed limit during a vehicle speed control operation.

The inter-vehicle distance adjustment switch 66 is a switch that changes an inter-vehicle distance (a target inter-vehicle distance) to a preceding vehicle during the vehicle speed control operation.

The lane change assistance switch 67 is a switch that allows the driver to perform a lane change when the driving assistance system 100 determines that the lane change of the host vehicle 10 is necessary during steering control and makes a notification for prompting the driver to change a lane by the presentation device 5.

The steering control switch 68 is, for example, a touch panel on a screen of the display 32 in the navigation system 3 and is a selector switch that switches ON/OFF of a steering control function.

The vehicle speed control and the steering control will be described later.

The input device 6 may be a device such as a dial switch or a microphone capable of inputting a command by voice of the driver, in addition to a push type switch capable of inputting a command by a hand operation of the driver, a touch panel disposed on a display screen, or the like.

Information (input information) input to the input device 6 is output to the controller 8.

The actuator 7 is a device that executes traveling control of the host vehicle 10 based on a command from the controller 8. The actuator 7 includes a drive actuator 71, a brake actuator 72, a steering actuator 73, and the like.

The drive actuator 71 is a device that adjusts a drive force of the host vehicle 10.

Specifically, when the host vehicle 10 is an internal combustion engine vehicle equipped with an engine as a traveling drive source, the drive actuator 71 includes a throttle actuator that adjusts an amount of air supplied to the engine (a throttle opening) and a fuel injection valve that adjusts an amount of fuel supplied to the engine (a fuel injection amount).

Furthermore, when the host vehicle 10 is a hybrid vehicle or an electric vehicle equipped with a motor as a traveling drive source, the drive actuator 71 includes a circuit (an inverter, a converter, or the like) capable of adjusting electric power supplied to the motor.

The brake actuator 72 is a device that operates a brake system in response to a command from the controller 8 to adjust a braking force applied to wheels of the host vehicle 10. The brake actuator 72 includes a hydraulic brake, or a regenerative brake.

The steering actuator 73 includes an assistance motor that controls a steering torque in an electric power steering system, or the like. The controller 8 controls an operation of the steering actuator 73 to control an operation of the wheels, thereby executing steering control of the host vehicle 10 described later.

The controller 8 includes a computer equipped with a central processing unit (CPU), a read-only memory (ROM), a random access memory (RAM), and an input/output interface (I/O interface). The controller 8 executes a specific program to execute processing for realizing the autonomous driving control (the driving assistance control) of this embodiment. For example, the controller 8 executes vehicle speed control, steering control, control of notification operations of various alerts, and the like, which will be described below. The controller 8 may be configured with one computer or may be configured with plural computers.

The controller 8 is configured to communicate various signals with the external sensor 1, the internal sensor 2, the navigation system 3, the in-vehicle device 4, the presentation device 5, and the input device 6. The controller 8 receives various types of information acquired by the external sensor 1, the internal sensor 2, and the navigation system 3, the operation information from the in-vehicle device 4, and the input information from the input device 6. Then, the controller 8 is programmed to acquire these pieces of information as traveling information of the host vehicle 10, and appropriately operate the actuator 7 based on the traveling information to execute the driving assistance control of this embodiment.

Hereinafter, the autonomous driving control (the driving assistance control) and the control of the notification operations of various alerts provided in the driving assistance system 100 according to this embodiment will be described.

The autonomous driving control (the driving assistance control) provided in the driving assistance system 100 includes a vehicle speed control function and a steering control function.

The vehicle speed control function is a function of controlling a traveling speed of a vehicle such that the traveling speed of the vehicle becomes a target value. In the vehicle speed control, when there is no other vehicles in front of the host vehicle 10, the control is performed so as to maintain a set target vehicle speed. On the other hand, when there is a vehicle in front of the host vehicle 10, the control is performed such that an inter-vehicle distance is kept constant with the target vehicle speed as an upper limit.

Furthermore, the vehicle speed control function includes a function of automatically setting a legal speed as the target vehicle speed.

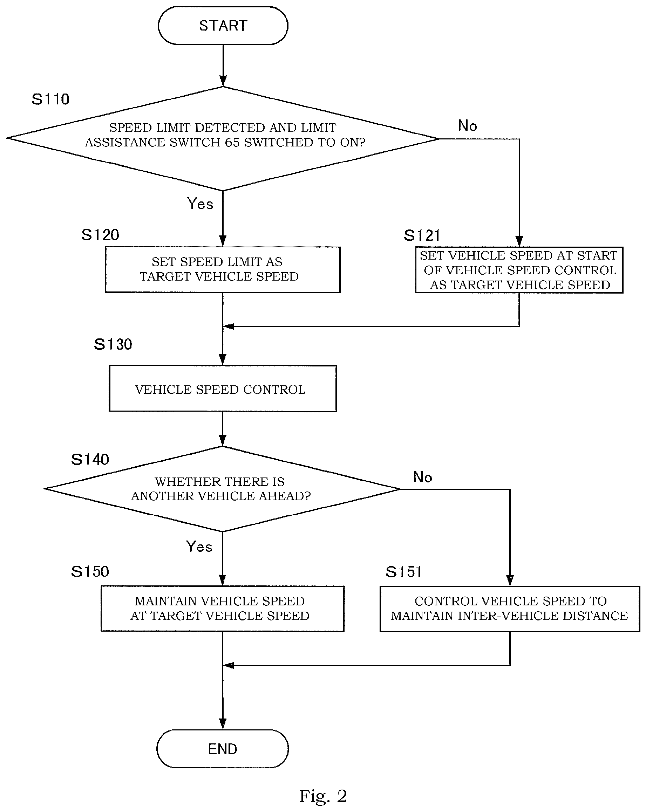

FIG. 2 is a flowchart showing the vehicle speed control according to this embodiment. The following vehicle speed control is repeatedly executed by the controller 8.

During the vehicle speed control described below, the driver can change the target vehicle speed at any time by operating the setting/coasting switch 62 or the resuming/accelerating switch 63. Further, the driver can stop at any time automatically setting the speed limit to the target vehicle speed by turning off the speed limit assistance switch 65. Furthermore, the driver can stop the vehicle speed control at any time by switching the main switch 61 to OFF, pressing the cancel switch 64, or depressing the brake pedal 43.

The vehicle speed control is control that is performed when the driving assistance system 100 is operating. When the main switch 61 of the input device 6 is switched to ON, a start command of the driving assistance system 100 is transmitted to the controller 8. Upon receiving the start command, the controller 8 activates the driving assistance system 100.

When the setting/coasting switch 62 is pressed by the driver during the operation of the driving assistance system 100, a start command for the vehicle speed control is transmitted to the controller 8. Upon receiving the start command of the vehicle speed control, the controller 8 starts the vehicle speed control.

When the vehicle speed control is started, in step S110, the controller 8 determines whether or not the navigation system 3 detects the speed limit of the road on which the host vehicle 10 is traveling and whether or not the speed limit assistance switch 65 is ON. When the speed limit is detected by the navigation system 3 and the speed limit assistance switch 65 is ON, the controller 8 proceeds to processing of step S120.

The speed limit of the road on which the host vehicle 10 is traveling may be detected by imaging the speed limit sign by the external sensor 1.

In step S120, the controller 8 sets a detected speed limit as the target vehicle speed.

On the other hand, in step S110, when the speed limit is not detected or the speed limit assistance switch 65 is OFF, the controller 8 proceeds to processing of step S121.

In step S121, the controller 8 sets, as the target vehicle speed, a vehicle speed when the setting/coasting switch 62 is pressed to start the vehicle speed control.

When the target vehicle speed is set in step S120 or S121, in step S130, the controller 8 controls the actuator 7 such that the vehicle speed of the host vehicle 10 becomes the set target vehicle speed.

Next, in step S140, the controller 8 determines whether there is another vehicle in front of the host vehicle 10 based on the surrounding information of the host vehicle 10 acquired by the external sensor 1.

When the controller 8 determines that there is no other vehicles in front of the host vehicle 10 in step S140, in step S150, the controller 8 controls the actuator 7 so as to maintain the vehicle speed of the host vehicle 10 at the set target vehicle speed.

On the other hand, when the controller 8 determines that there is another vehicle in front of the host vehicle 10 in step S140, the controller 8 proceeds to processing of step S151. In step S151, the controller 8 controls the actuator 7 such that the inter-vehicle distance is kept constant with the set target vehicle speed as an upper limit.

After executing the processing in step S150 or S151, the controller 8 returns to step S110 again. In step S110, when the speed limit is not detected or the speed limit assistance switch 65 is OFF, the controller 8 proceeds to processing of step S121. In this case, since the target vehicle speed has already been set, the controller 8 maintains the set target vehicle speed.

The controller 8 displays information such as whether or not the vehicle speed control is executed, the target vehicle speed, and the speed limit on the meter display 51 and the head-up display 52 of the presentation device 5. In addition, for example, when the target vehicle speed is changed or when a new speed limit is detected, the controller 8 may be set to notify the driver of the information by a character display on the meter display 51 and the head-up display 52 or by voice from the speaker 53.

Next, the steering control function will be described. The steering control function of this embodiment includes a lane center keeping assistance function and a lane change assistance function.

The lane center keeping assistance function is a function of controlling the steering such that the host vehicle 10 travels in a vicinity of a center of a lane and assisting a handle operation of the driver. The lane center keeping control is started by switching the touch panel type steering control switch 68 of the navigation system 3 to ON while the vehicle speed control is executed. The lane center keeping control is started in a state (a hands-on mode) where the driver keeps the hands on the handle, and when a predetermined condition is satisfied, the driver can release the hands from the handle (a hands-off mode).

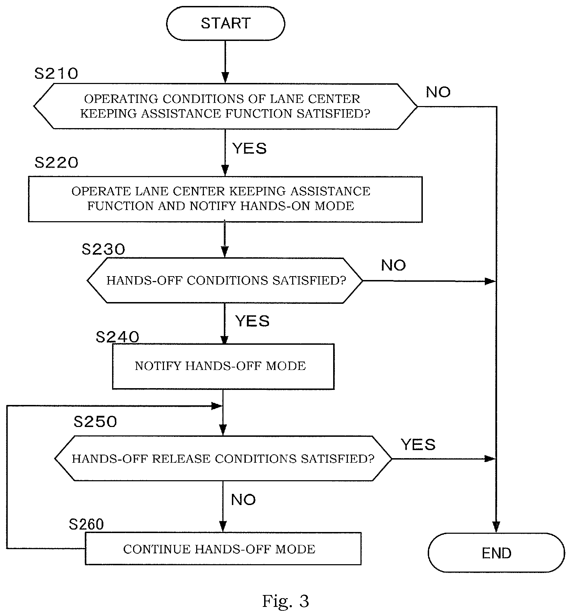

FIG. 3 is a flowchart illustrating the lane center keeping control according to this embodiment. The following lane center keeping control is repeatedly executed by the controller 8.

During the lane center keeping control described below, the driver can stop the lane center keeping control at any time by switching the steering control switch 68 to OFF. Further, the driver can stop the lane center keeping control and the vehicle speed control at any time by switching the main switch 61 to OFF, pressing the cancel switch 64, or depressing the brake pedal 43.

When the steering control switch 68 is switched to ON by the driver during the operation of the vehicle speed control function, a start command of the lane center keeping control is transmitted to the controller 8. Upon receiving the start command, the controller 8 starts the lane center keeping control.

When the lane center keeping control is started, the controller 8 displays that the steering control is operated on the meter display 51 and the head-up display 52 of the presentation device 5.

Subsequently, in step S210, the controller 8 acquires the traveling information of the host vehicle 10, and determines whether or not operating conditions of the lane center keeping assistance function are satisfied based on the acquired traveling information. Specifically, for example, the controller 8 determines whether all of the following conditions are satisfied.
(1) The lane markers on both sides are detected.
(2) The driver keeps the hands on the handle.
(3) The vehicle is traveling in the vicinity of the center of the lane.
(4) The direction indicator does not operate.
(5) The wiper does not operate at a high speed.
(6) When there is a highly accurate map, there are no tollgates, expressway exits, confluences, intersections, and lane reduction points within a predetermined distance (for example, about 200 m) ahead.

When all of these conditions are satisfied, the controller 8 operates the lane center keeping assistance function in step S220. On the other hand, until all the above conditions are satisfied, the controller 8 does not operate the lane center keeping assistance function.

The operating conditions of the lane center keeping assistance function are examples, are not limited to these conditions, and can be appropriately set so as to operate the lane center keeping assistance function if certain predetermined conditions are satisfied depending on the situation.

In step S220, the lane center keeping assistance function is operated, and the operation of the steering actuator 73 is controlled such that the host vehicle 10 travels in the center of the lane. In addition, the controller 8 operates the lane center keeping assistance function and notifies, by the meter display 51 and the head-up display 52 of the presentation device 5, the driver to maintain a state of keeping the hands on the handle. That is, the driver is notified of a hands-on mode in which driving assistance (autonomous driving) is executed in a state where the driver keeps the hands on the handle.

Next, in step S230, the controller 8 determines whether or not hands-off conditions under which the driver may release the hands from the handle are satisfied based on the traveling information of the host vehicle 10. Specifically, for example, the controller 8 determines whether all of the following conditions are satisfied.
(1) The vehicle is traveling on an expressway.
(2) The vehicle is traveling on a road structurally separated from an opposite lane.
(3) The vehicle is traveling on a road with a highly accurate map.
(4) The vehicle is traveling at a vehicle speed equal to or lower than a speed limit.
(5) A reception signal of the GPS receiver (GNSS) 311 is valid.
(6) The driver keeps the hands on the handle.
(7) The driver is facing forward.
(8) There are no tollgates, expressway exits, confluences, intersections, and lane reduction points within a predetermined distance (for example, 800 m) ahead.
(9) There is no sharp curve (for example, a curvature radius R is 100 m or less) within a predetermined distance (for example, 500 m) ahead.
(10) The vehicle is not traveling in a tunnel (for example, a portion exceeding 500 m from a tunnel entrance).
(11) The accelerator pedal is not depressed.

When all of these conditions are satisfied, the controller 8 proceeds to processing of step S240.

On the other hand, when any one of the hands-off conditions is not satisfied, the controller 8 returns to step S210. When the operating conditions of the lane center keeping assistance function are satisfied in step S210, the controller 8 continues to operate the lane center keeping assistance function and notify the hands-on mode in step S220. When the operating conditions of the lane center keeping assistance function are not satisfied in step S210, the controller 8 stops the operation of the lane center keeping assistance function until the operating conditions of the lane center keeping assistance function are satisfied.

When the hands-off conditions are satisfied, in step S240, the controller 8 notifies the driver that the hands may be released from the handle by the meter display 51 and the head-up display 52 of the presentation device 5. That is, the driver is notified that the mode is switched to the hands-off mode in which the driving assistance (the autonomous driving) is executed in a state where the driver releases the hands from the handle.

The hands-off conditions are examples, are not limited to these conditions, and can be appropriately set so as to switch to the hands-off mode if certain predetermined conditions are satisfied depending on the situation.

In step S250, based on the traveling information, the controller 8 determines whether or not hands-off release conditions for switching from the hands-off mode to the hands-on mode are satisfied. Specifically, for example, the controller 8 determines whether any one of the following conditions is satisfied.
(1) The vehicle is traveling on a road other than an expressway.
(2) The vehicle is traveling in a two-way traffic section.
(3) The vehicle is traveling on a road having no highly accurate map.
(4) The vehicle is traveling at a vehicle speed exceeding a speed limit.
(5)The GPS receiver (GNSS) 311 cannot receive a signal.
(6) After a forward looking alert is issued, the driver does not face forward within a predetermined time (for example, 5 seconds).
(7) The driver cannot be detected by the driver monitoring camera 21.
(8) There is any one of: tollgates, expressway exits, confluences, intersections, and lane reduction points within a predetermined distance (for example, 800 m) ahead.
(9) When the vehicle is traveling at a vehicle speed less than a predetermined speed (for example, about 40 km/h), there is a sharp curve (for example, a curvature radius R is 100 m or less) within a predetermined distance (for example, 200 m) ahead.
(10) When the vehicle is traveling at a vehicle speed equal to or higher than a predetermined speed (for example, about 40 km/h), there is a sharp curve (for example, a curvature radius R is 170 m or less) within a predetermined distance (for example, 200 m) ahead.
(11) The vehicle is traveling in a tunnel (for example, a portion exceeding 500 m from a tunnel entrance).
(12) The driver holds the handle and depresses the accelerator pedal.
(13) The approach alert is issued.

When any one of these conditions is satisfied, the controller 8 releases the hands-on mode.

In (6) of the hands-off release conditions here, the hands-off mode is not released until a predetermined time elapses after the forward looking alert is issued. That is, under the hands-off conditions, a condition that the driver is facing forward (7) is set as a switching condition to the hands-off mode, whereas under the hands-off release conditions, the hands-off mode is not immediately released even when the driver is not facing forward. As a result, for example, it is possible to prevent the hands-off mode from being released, for example, in a case where the driver simply checks the right and the left, instead of distracted driving.

When any one of the hands-off release conditions is satisfied, the controller 8 releases the hands-off mode and returns to step S210. When the operating conditions of the lane center keeping assistance function are satisfied in step S210, in step S220, the controller 8 continues to operate the lane center keeping assistance function and notifies that the mode is switched to the hands-on mode. When the operating conditions of the lane center keeping assistance function are not satisfied in step S210, the controller 8 stops the operation of the lane center keeping assistance function until the operating conditions of the lane center keeping assistance function are satisfied.

On the other hand, when the hands-off release conditions are not satisfied in step S250, the controller 8 continues the hands-off mode (step S260) and returns to the processing of step S250. That is, the controller 8 continues the hands-off mode until the hands-off release conditions are satisfied.

The hands-off release conditions are examples, are not limited to these conditions, and can be appropriately set such that the hands-off mode is released if certain predetermined conditions are satisfied depending on the situation.

The processing from step S210 to step S260 is repeatedly executed until the driver stops the lane center keeping control.

When the lane center keeping control is started or when the hands-on mode and the hands-off mode are switched, the driver may be notified of the start or switching by character display on the meter display 51 and the head-up display 52 or by voice from the speaker 53.

Next, the lane change assistance function will be described.

The lane change assistance function is a function of controlling the steering and assisting the lane change when the driver operates the direction indicator 44 or when the driving assistance system 100 proposes a lane change and the driver presses the lane change assistance switch 67. The lane change control is one type of steering control and is the driving assistance (the autonomous driving) control that is executed in the state where the driver keeps the hands on the handle, that is, in the hands-on mode.

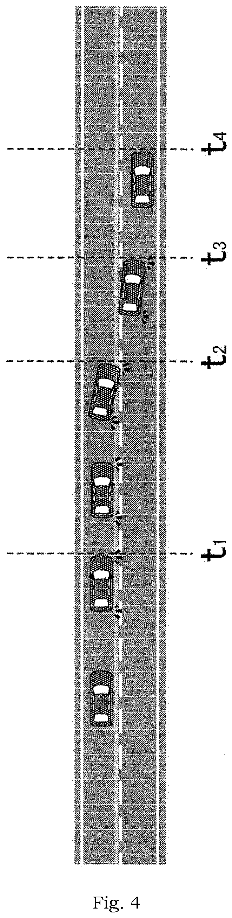

FIG. 4 is a diagram illustrating lane change control started with a direction indicator operation performed by a driver as a trigger.

As illustrated in FIG. 4, when the driver turns on the direction indicator 44 at a time t₁ during a steering control operation, if a predetermined condition is satisfied, a lane change procedure (LCP) is started, and the steering control is executed.

After the start of the LCP, when a predetermined condition is satisfied, a lane change manoeuvre (LCM) is started at a time t₂ after several seconds from the start of LCP, the lane change is performed, and the LCM is completed at a time t₃ within several seconds from the start of the LCM.

The direction indicator 44 is turned off automatically or by a driver operation at a time t₄ within several seconds after the completion of the LCM, and LCP is completed.

A time from t₁ (turning on the direction indicator) to t₂ (LCM start) and t₃ (LCM completion), and a time from t₃ (LCM completion) to t₄ (turning off the direction indicator) are all preferably about several seconds, but are not limited thereto, and can be freely set depending on the situation.

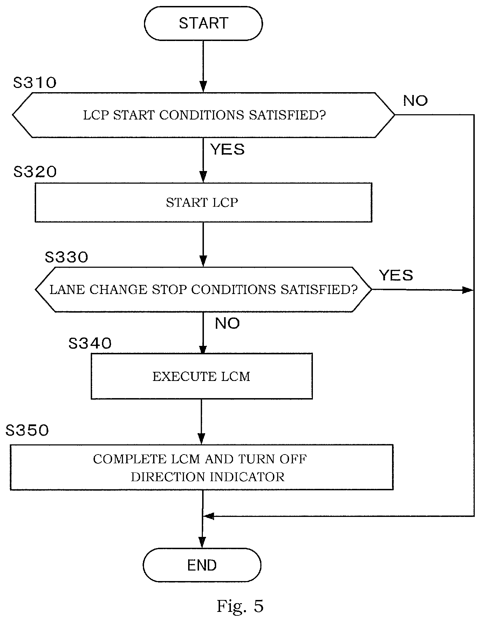

FIG. 5 is a flowchart illustrating the lane change control started with the direction indicator operation performed by the driver as the trigger. The following lane change control is executed by the controller 8.

During the steering control operation (the steering control switch 68 is ON), when the driver operates the direction indicator 44, a start command of the lane change procedure (LCP) is transmitted to the controller 8.

When the controller 8 receives an LCP start command, in step S310, the controller 8 determines whether or not LCP start conditions are satisfied based on the traveling information of the host vehicle 10. Specifically, for example, the controller 8 determines whether all of the following conditions are satisfied.
(1) After the start of LCP, the driver keeps the hands on the handle within a predetermined time (for example, about 2 seconds).
(2) The vehicle speed is a predetermined speed (for example, about 60 km/h) or higher.
(3) There is no vehicle detected in a destination to which the vehicle is to be changed (there is a space in a lane change direction).
(4) There is a lane in a lane change direction.
(5) A lane marker in the lane change direction is a broken line.
(6) The vehicle is travelling on a straight line or a gentle curve (for example, a curvature radius R is 250 m or more).
(7) The time is within a predetermined time (for example, within about 1 second) after the driver performs a direction indicator operation.

When all of these conditions are satisfied, in step S320, the controller 8 starts the lane change procedure (LCP).

On the other hand, when even any one of the LCP start conditions is not satisfied, the controller 8 stops the lane change procedure (LCP).

In step S320, the controller 8 starts the lane change procedure (LCP), and controls the operation of the actuator 7 (in particular, the steering actuator 73) so as to assist the handle operation necessary for the lane change. In addition, the controller 8 displays information such as the start of the lane change procedure (LCP) and the lane change direction on the meter display 51 and the head-up display 52 of the presentation device 5. In addition to the display on the meter display 51 and the head-up display 52, the driver may be notified of the start of the lane change procedure (LCP) by voice from the speaker 53.

The LCP start conditions are examples, are not limited to these conditions, and can be appropriately set such that LCP is started if certain predetermined conditions are satisfied depending on the situation.

Next, in step S330, the controller 8 determines whether or not lane change stop conditions are satisfied based on the traveling information of the host vehicle 10. Specifically, for example, the controller 8 determines whether any one of the following conditions is satisfied.
(1) After the start of the LCP, the lane change manoeuvre (LCM) cannot be started within a predetermined time (for example, 5 seconds).
(2) After the start of the LCP and before the start of the LCM, the vehicle speed falls below a predetermined speed (for example, about 50 km/h).
(3) After the start of the LCP and before the start of the LCM, there is no space in an adjacent lane necessary for the lane change.
(4) Before the start of the LCM, the lane marker is not detected.
(5) Before the start of the LCM, it is determined that there is no adjacent lane in the lane change direction, or that there is no adjacent lane within a certain distance ahead.
(6) Before the start of the LCM, it is determined that there is a curve having a predetermined curvature radius (for example, a curvature radius R is 250 m or less) within a certain distance ahead.
(7) Before the start of the LCM, it is determined that there is a section within a certain distance ahead where a type of the lane marker indicates that a lane change to an adjacent lane in the lane change direction is prohibited.
(8) Before the start of the LCM, the radar 12 detects shielding, radio interference, or an axial deviation.
(9) The hands-on alert is issued.
(10) The driver turns off the direction indicator.

When any one of these conditions is satisfied, the controller 8 stops the lane change assistance control. The hands-on alert is issued when the driver does not keep the hands on the handle within a predetermined time (for example, about 2 seconds) after the start of the LCP.

On the other hand, when the lane change stop conditions are not satisfied, in step S340, the controller 8 controls the operation of the actuator 7 (in particular, the steering actuator 73) to execute the lane change manoeuvre (LCM) of the host vehicle 10.

Upon completion of the LCM, the controller 8 turns off the direction indicator 44 in step S350. When the direction indicator 44 is turned off, the LCP ends. In addition, the direction indicator 44 may be turned off by a driver operation.

The lane change stop conditions are examples, are not limited to these conditions, and can be appropriately set such that the lane change is stopped if certain predetermined conditions are satisfied depending on the situation.

Next, the lane change control proposed by the driving assistance system 100 will be described. The lane change assistance function proposed by the driving assistance system 100 includes the overtaking assistance function for overtaking a vehicle having a slow speed, and the route travel assistance function for traveling according to a route to a destination. The overtaking assistance function is a function of controlling the steering and assisting an overtaking operation when a vehicle having a speed lower than the set speed is detected ahead. The route travel assistance function is a function of controlling the steering when the driver sets a destination and assisting the lane change necessary for traveling according to the route.

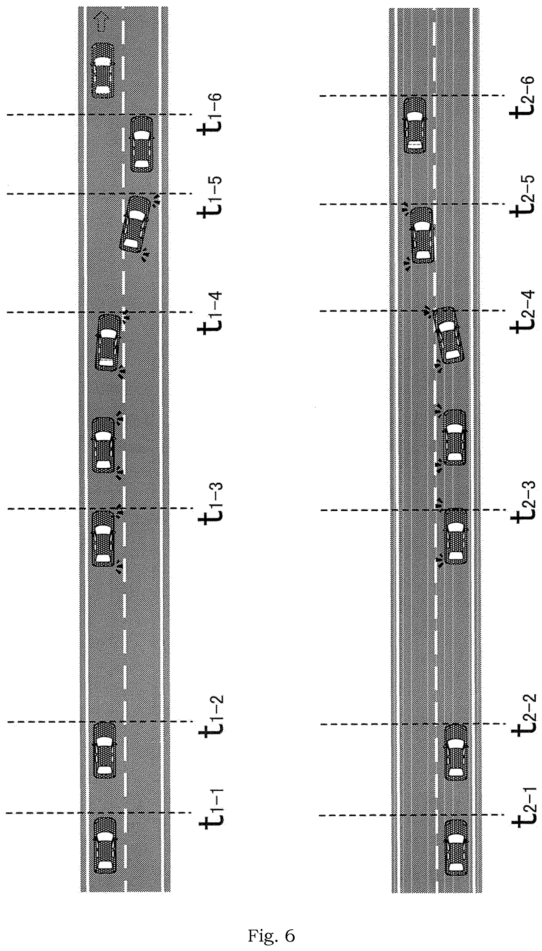

FIG. 6 is a diagram illustrating the lane change control based on the overtaking assistance function. The lane change control based on the overtaking assistance function is started with the proposal of the driving assistance system 100 as a trigger when there is a vehicle having a speed lower than the set speed in front of the host vehicle 10.

During the travelling of autonomous driving (the steering control operation), when a vehicle having a speed lower than the set speed is detected in front of the host vehicle 10, if a predetermined condition is satisfied, a notification of prompting the driver to change the lane to an overtaking lane is made by the presentation device 5 at a time t₁₋₁. After the notification of the lane change, when the lane change assistance switch 67 is pressed by the driver at a time t₁₋₂ within a predetermined time, the direction indicator 44 is turned on at a time t₁₋₃ within several seconds and the lane change procedure (LCP) is started.

When the LCP is started, the steering control is executed, and if a predetermined condition is satisfied, the lane change manoeuvre (LCM) is started at a time t₁₋₄ within several seconds from the start of the LCP, and the lane change to the overtaking lane is performed. At a time t₁₋₅ within several seconds after the start of the LCM, the lane change manoeuvre (LCM) for changing the lane to the overtaking lane is completed. At a time t₁₋₆ within several seconds after the completion of the LCM, the direction indicator 44 is turned off automatically or by a driver operation and LCP is completed.

A time from t₁₋₂ (when the lane change assistance switch 67 is pressed) to t₁₋₃ (turning on the direction indicator), a time from t₁₋₃ (turning on the direction indicator) to t₁₋₄ (LCM start) and t₁₋₅ (LCM completion), and a time from t₁₋₅ (LCM completion) to t₁₋₆ (turning off the direction indicator) are all preferably about several seconds, but are not limited thereto, and can be freely set depending on the situation.

Next, when the host vehicle 10 overtakes a preceding vehicle, if a predetermined condition is satisfied, a notification of prompting the driver to change the lane to a traveling lane is made by the presentation device 5 at a time t₂₋₁. After the notification of the lane change, when the lane change assistance switch 67 is pressed by the driver at a time t₂₋₂, the direction indicator 44 is turned on at a time t₂₋₃ within several seconds and the lane change procedure (LCP) is started.

When the LCP is started, the steering control is executed, and if a predetermined condition is satisfied, the lane change manoeuvre (LCM) is started at a time t₂₋₄ within several seconds from the start of the LCP, and the lane change to the traveling lane is performed. At a time t₂₋₅ within several seconds after the start of the LCM, the lane change manoeuvre (LCM) to the traveling lane is completed. At a time t₂₋₆ within several seconds after the completion of the LCM, the direction indicator 44 is turned off automatically or by a driver operation and the LCP is completed.

A time from t₂₋₂ (when the lane change assistance switch 67 is pressed) to t₂₋₃ (turning on the direction indicator), a time from t₂₋₃ (turning on the direction indicator) to t₂₋₄ (LCM start) and t₂₋₅ (LCM completion), and a time from t₂₋₅ (LCM completion) to t₂₋₆ (turning off the direction indicator) are all preferably about several seconds, but are not limited thereto, and can be freely set depending on the situation.

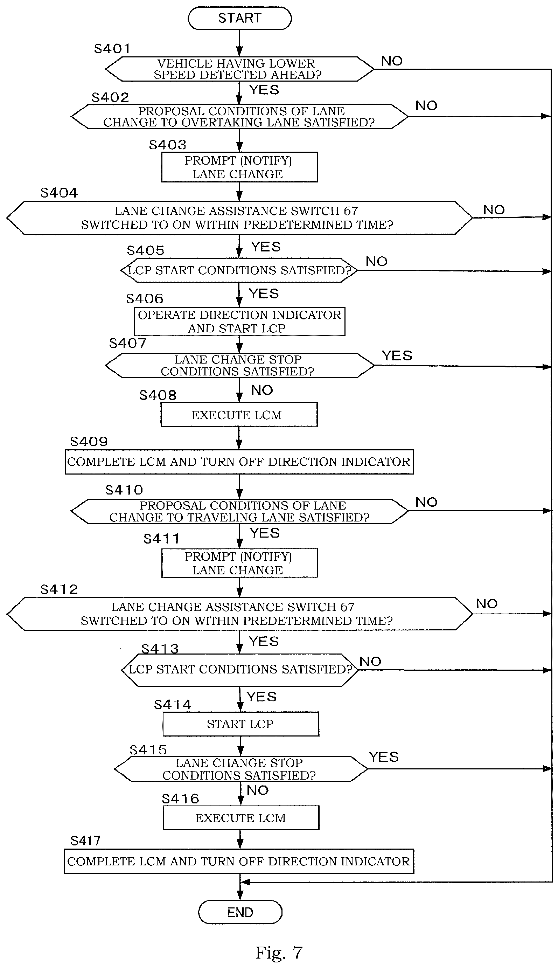

FIG. 7 is a flowchart illustrating the lane change control based on the overtaking assistance function. The following lane change control is executed by the controller 8.

In step S401, during the steering control operation (in a state where the steering control switch 68 is ON), the controller 8 determines, based on the traveling information of the host vehicle 10, whether or not a vehicle having a speed lower than the set speed is detected in front of the host vehicle 10.

When a vehicle having a speed lower than the set speed is detected in front of the host vehicle 10, in step S402, the controller 8 determines whether or not proposal conditions of lane change to the overtaking lane are satisfied based on the traveling information of the host vehicle 10. Specifically, for example, the controller 8 determines whether all of the following conditions are satisfied.
(1) The vehicle is in the hands-off mode.
(2) The vehicle speed is a predetermined speed (for example, about 60 km/h) or higher.
(3) There is space for lane change after 5 seconds.
(4) There is a lane in a lane change direction.
(5) A lane marker in the lane change direction is a broken line.
(6) The vehicle is travelling on a straight line or a gentle curve (for example, a curvature radius R is 250 m or more).
(7) The vehicle speed of the host vehicle 10 is lower than the set target vehicle speed by a predetermined speed (for example, 5 km/h) or more.
(8) The vehicle speed of the preceding vehicle is lower than the set target vehicle speed by a predetermined speed (for example, 10 km/h) or more.
(9) The inter-vehicle distance between the host vehicle 10 and the preceding vehicle is less than the inter-vehicle distance set based on a speed difference (for example, in a case where the inter-vehicle distance is set to 50 m when the host vehicle is traveling at a speed of 100 km/h and the speed difference is 10 km/h, or in a case where the inter-vehicle distance is less than 50 m when the host vehicle is traveling at 100 km/h and the speed difference is 10 km/h.)
(10) A speed of a preceding vehicle after the lane change is higher than that of the preceding vehicle in the travelling lane by a predetermined speed (for example, about 5 km/h) or more.

When all of these conditions are satisfied, it is estimated that a lane change is necessary.

The proposal conditions of the lane change to the overtaking lane are examples, are not limited to these conditions, and can be appropriately set such that it is estimated that the lane change is necessary if certain predetermined conditions are satisfied depending on the situation.

When all of the proposal conditions of the lane change to the overtaking lane are satisfied, in step S403, the controller 8 prompts the driver to change the lane by notification of the presentation device 5.

Subsequently, in step S404, when the controller 8 detects that the lane change assistance switch 67 is pressed by the driver, the controller 8 proceeds to processing of step S405. On the other hand, if the lane change assistance switch 67 is not pressed within a predetermined time, the controller 8 stops the lane change control.

In step S405, the controller 8 determines whether or not lane change procedure (LCP) start conditions are satisfied based on the traveling information of the host vehicle 10. Specifically, for example, the controller 8 determines whether all of the following conditions are satisfied.
(1) The driver keeps the hands on the handle within a predetermined time after the lane change assistance switch 67 is pressed.
(2) The vehicle speed is a predetermined speed (for example, about 60 km/h) or higher.
(3) There is no vehicle detected in a destination to which the lane is to be changed (there is a space in a lane change direction).
(4) There is a lane in a lane change direction.
(5) A lane marker in the lane change direction is a broken line.
(6) The vehicle is travelling on a straight line or a gentle curve (for example, a curvature radius R is 250 m or more).
(7) The vehicle speed of the host vehicle 10 is lower than the set target vehicle speed by a predetermined speed (for example, 5 km/h) or more.
(8) The vehicle speed of the preceding vehicle is lower than the set target vehicle speed by a predetermined speed (for example, 10 km/h) or more.
(9) The speed of the preceding vehicle after the lane change is higher than that of the preceding vehicle in the travelling lane by a predetermined speed (for example, about 5 km/h) or more.
(10) The time is within a predetermined time after the lane change assistance switch 67 is pressed.

When any one of the LCP start conditions is not satisfied, the controller 8 stops the lane change control.

On the other hand, when all of the LCP start conditions are satisfied, in step S406, the controller 8 turns on the direction indicator 44 within a predetermined time of several seconds after the driver presses the lane change assistance switch 67, and starts the lane change procedure (LCP). When the lane change procedure (LCP) is started, the controller 8 controls the operation of the actuator 7 (in particular, the steering actuator 73) so as to assist the handle operation necessary for the lane change. In addition, the controller 8 displays information such as the start of the lane change procedure (LCP) and the lane change direction on the meter display 51 and the head-up display 52 of the presentation device 5. In addition to the display on the meter display 51 and the head-up display 52, the driver may be notified of the start of the lane change procedure (LCP) by voice from the speaker 53.

The LCP start conditions are examples, are not limited to these conditions, and can be appropriately set such that LCP is started if certain predetermined conditions are satisfied depending on the situation.

Next, in step S407, the controller 8 determines whether or not the lane change stop conditions are satisfied based on the traveling information of the host vehicle 10. Specifically, for example, the controller 8 determines whether any one of the following conditions is satisfied.
(1) Before the start of the LCP, the vehicle speed exceeds the speed limit.
(2) Before the start of the LCP, the driver keeps the hands on the handle and depresses the accelerator pedal.
(3) After the start of the LCP, a predetermined time is exceeded (after the start of the LCP, the LCM cannot be started within a predetermined time).
(4) Before the start of the LCM, the vehicle speed falls below a predetermined speed (for example, about 50 km/h).
(5) After the start of the LCP and before the start of the LCM, there is no space in an adjacent lane necessary for the lane change.
(6) Before the start of the LCM, the lane marker is not detected.
(7) Before the start of the LCM, it is determined that there is no adjacent lane in the lane change direction, or that there is no adjacent lane within a certain distance ahead.
(8) Before the start of the LCM, it is determined that there is a curve having a predetermined curvature radius (for example, a curvature radius R is 250 m or less) within a certain distance ahead.
(9) Before the start of the LCM, it is determined that there is a section within a certain distance ahead where a type of the lane marker indicates that a lane change to an adjacent lane in the lane change direction is prohibited.
(10) Before the start of the LCM, the radar 12 detects shielding, radio interference, or an axial deviation.
(11) The hands-on alert is issued.
(12) The driver turns off the direction indicator.

When any one of these conditions is satisfied, the controller 8 stops the lane change control. The hands-on alert is issued when the driver does not keep the hands on the handle within a predetermined time after the lane change assistance switch 67 is pressed.

On the other hand, when the lane change stop conditions are not satisfied, in step S408, the controller 8 controls the operation of the actuator 7 (in particular, the steering actuator 73) and to laterally move the host vehicle 10, and then executes the lane change manoeuvre (LCM) for changing the lane to the overtaking lane.

After the completion of the lane change manoeuvre (LCM) for changing the lane to the overtaking lane, in step S409, the controller 8 turns off the direction indicator 44 and ends the LCP. The direction indicator 44 may be turned off by a driver operation.

The lane change stop conditions are examples, are not limited to these conditions, and can be appropriately set such that the lane change is stopped if certain predetermined conditions are satisfied depending on the situation.

Next, in step S410, it is determined whether or not the proposal conditions of the lane change to the traveling lane are satisfied. Specifically, for example, it is determined whether all of the following conditions are satisfied.
(1) The vehicle speed is a predetermined speed (for example, about 60 km/h) or higher.
(2) There is space for the lane change after a predetermined time.
(3) There is a lane in a lane change direction.
(4) A lane marker in the lane change direction is a broken line.
(5) The vehicle is travelling on a straight line or a gentle curve (for example, a curvature radius R is 250 m or more).
(6) The vehicle speed of the host vehicle 10 is lower than the set target vehicle speed by a predetermined speed (for example, 5 km/h) or more.
(7) The vehicle speed of the preceding vehicle is lower than the set target vehicle speed by a predetermined speed (for example, 10 km/h) or more.
(8) The speed difference between the vehicle speed of the preceding vehicle after the lane change and the vehicle speed of the host vehicle is within a predetermined speed (for example, about 5 km/h).

If all of these conditions are satisfied, it is estimated that a lane change to return to the traveling lane is necessary.

The proposal conditions of the lane change to the traveling lane are examples, are not limited to these conditions, and can be appropriately set such that it is estimated that the lane change to return to the traveling lane is necessary if certain predetermined conditions are satisfied depending on the situation.

When all of the proposal conditions of the lane change to the traveling lane are satisfied, in step S411, the controller 8 prompts the driver to change the lane to the traveling lane by notification of the presentation device 5.

Subsequently, in step S412, when the controller 8 detects that the lane change assistance switch 67 is pressed by the driver, the controller 8 proceeds to processing of step S413. On the other hand, if the lane change assistance switch 67 is not pressed within a predetermined time after the lane change is prompted, the controller 8 stops the lane change control.

In step S413, the controller 8 determines whether or not lane change procedure (LCP) start conditions are satisfied based on the traveling information of the host vehicle 10. The LCP start conditions here are the same as those of step S405. When any one of the LCP start conditions is not satisfied, the controller 8 stops the lane change control for changing the lane to the traveling lane.

On the other hand, when all of the LCP start conditions are satisfied, in step 414, the controller 8 turns on the direction indicator 44 within a predetermined time after the driver presses the lane change assistance switch 67, and starts the lane change procedure (LCP). When the LCP is started, the controller 8 controls the operation of the actuator 7 so as to assist the handle operation necessary for the lane change, and notifies the driver of information such as the start of the LCP and a lane change direction by the presentation device 5.

Next, in step S415, the controller 8 determines whether or not the lane change stop conditions are satisfied based on the traveling information of the host vehicle 10. The lane change stop conditions are the same as those of step S407. When any one of the lane change stop conditions is satisfied, the controller 8 stops the lane change control.

On the other hand, when the lane change stop conditions are not satisfied, in step S416, the controller 8 executes the lane change manoeuvre (LCM) for changing the lane to the overtaking lane after laterally moving the host vehicle 10.

Upon completion of the LCM, the controller 8 turns off the direction indicator 44 and ends the LCP in step S417. The direction indicator 44 may be turned off by a driver operation.

Next, the route travel assistance function for traveling according to a route to a destination will be described. The route travel assistance function is a function of controlling the steering to assist the lane change necessary for traveling according to the route when an occupant such as a driver sets the destination.

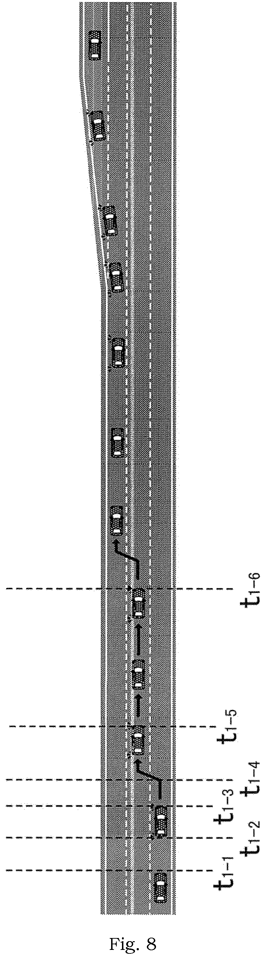

FIG. 8 is a diagram illustrating the lane change control based on the route travel assistance function. The lane change control based on the route travel assistance function is started with a proposal of the driving assistance system 100 as a trigger when the vehicle arrives at a lane change point necessary for traveling according to a route in a case where the driver sets a destination in the navigation system 3. The case where the vehicle arrives at the lane change point necessary for traveling according to the route is, for example, a case where the vehicle approaches an exit road, a branch road, or a lane reduction point, or the like.

During the travelling of autonomous driving (the steering control operation), when the vehicle arrives at the lane change point necessary for traveling according to a route toward a destination set by the driver or the like at a time t₁₋₁, if a predetermined condition is satisfied, a notification of prompting the driver to change the lane is made by the presentation device 5. After the notification of the lane change, when the lane change assistance switch 67 is pressed by the driver at a time t₁₋₂, the direction indicator 44 is turned on at a time t₁₋₃ within several seconds and the lane change procedure (LCP) is started.

Similarly to the lane change control based on the overtaking assistance function, when the LCP is started at a time t₁₋₃, the steering control is executed. After the start of the LCP, when a predetermined condition is satisfied, the lane change manoeuvre (LCM) is started and the lane change is performed at a time t₁₋₄ within several seconds, and the LCM is completed at a time t₁₋₅ within several seconds after the start of the LCM. After the completion of the LCM, at a time t₁₋₆, the direction indicator 44 is turned off automatically or by the driver operation and LCP is completed.

When it is necessary to change lanes multiple times, the same control as shown in FIG. 8 is performed multiple times.

A time from t₁₋₂ (when the lane change assistance switch 67 is pressed) to t₁₋₃ (turning on the direction indicator), a time from t₁₋₃ (turning on the direction indicator) to t₁₋₄ (LCM start) and t₁₋₅ (LCM completion), and a time from t₁₋₅ (LCM completion) to t₁₋₆ (turning off the direction indicator) are all preferably about several seconds, but are not limited thereto, and can be freely set depending on the situation.

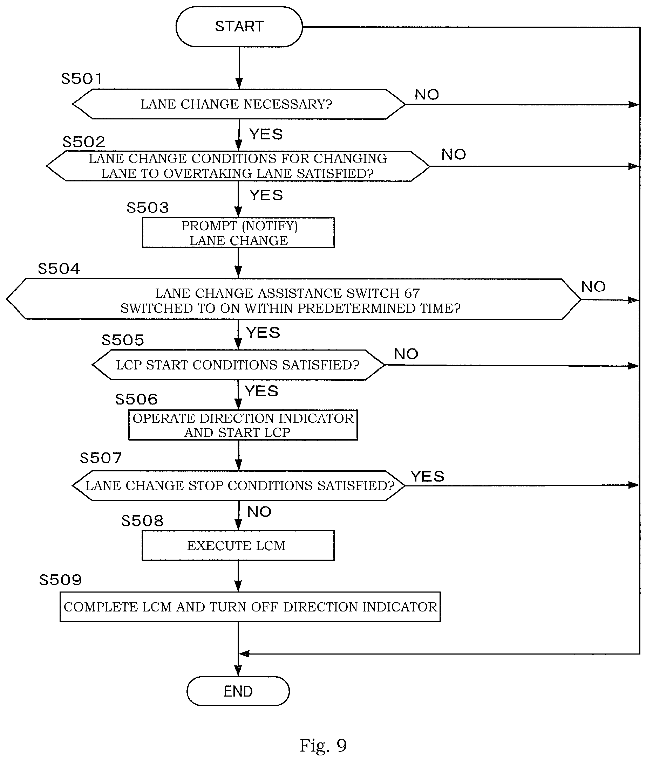

FIG. 9 is a flowchart illustrating the lane change control based on the route travel assistance function. The following lane change control is executed by the controller 8.

In step S501, during the steering control operation (the steering control switch 68 is ON), the controller 8 determines, based on the traveling information, whether or not a lane change is necessary for the host vehicle 10 to travel according to a route to a set destination. When the lane change is not necessary, the lane change control is stopped.

When the controller 8 determines that a lane change is necessary for the host vehicle 10 to travel according to the route, in step S502, the controller 8 determines whether or not proposal conditions of a lane change along the route are satisfied. Specifically, for example, the controller 8 determines whether all of the following conditions are satisfied.
(1) A destination is set in the navigation system 3.
(2) The vehicle is in the hands-off mode.
(3) The vehicle speed is a predetermined speed (for example, about 60 km/h) or higher.
(4) The lane change to a target lane is possible (the lane change is not prohibited).
(5) The vehicle is travelling on a straight line or a gentle curve (for example, a curvature radius R is 250 m or more).

When all of the proposal conditions of the lane change along the route are satisfied, it is estimated that the lane change along the route is necessary, and in step S503, the controller 8 prompts the driver to change the lane by the notification of the presentation device 5.

The proposal conditions of the lane change along the route are examples, are not limited to these conditions, and can be appropriately set such that it is estimated that the lane change along the route is necessary if certain predetermined conditions are satisfied depending on the situation.

Subsequently, in step S504, when the controller 8 detects that the lane change assistance switch 67 is pressed by the driver, the controller 8 proceeds to processing of step S505. On the other hand, if the lane change assistance switch 67 is not pressed within a predetermined time, the controller 8 stops the lane change control.

In step S505, the controller 8 determines whether or not the lane change procedure (LCP) start conditions are satisfied based on the traveling information of the host vehicle 10. Specifically, for example, the controller 8 determines whether all of the following conditions are satisfied.
(1) The driver keeps the hands on the handle within a predetermined time (for example, within about 2 seconds) after the lane change assistance switch 67 is pressed.
(2) The vehicle speed is a predetermined speed (for example, about 60 km/h) or higher.
(3) There is no vehicle detected in a destination to which the lane is to be changed (there is a space in a lane change direction).
(4) There is a lane in a lane change direction.
(5) A lane marker in the lane change direction is a broken line.
(6) The vehicle is travelling on a straight line or a gentle curve (for example, a curvature radius R is 250 m or more).

When any one of these conditions is not satisfied, the controller 8 stops the lane change control.

On the other hand, when all of the LCP start conditions are satisfied, in step S506, the controller 8 turns on the direction indicator 44 within a predetermined time of several seconds after the driver presses the lane change assistance switch 67, and starts the lane change procedure (LCP). When the lane change procedure (LCP) is started, the controller 8 controls the operation of the actuator 7 (in particular, the steering actuator 73) so as to assist the handle operation necessary for the lane change. In addition, the controller 8 displays information such as the start of the lane change procedure (LCP) and the lane change direction on the meter display 51 and the head-up display 52 of the presentation device 5. In addition to the display on the meter display 51 and the head-up display 52, the driver may be notified of the start of the lane change procedure (LCP) by voice from the speaker 53.

The LCP start conditions are examples, are not limited to these conditions, and can be appropriately set such that the LCP is started if certain predetermined conditions are satisfied depending on the situation.

Next, in step S507, the controller 8 determines whether or not the lane change stop conditions are satisfied based on the traveling information of the host vehicle 10. Specifically, for example, the controller 8 determines whether any one of the following conditions is satisfied.
(1) Before the start of the LCP, the vehicle speed exceeds the speed limit.
(2) Before the start of the LCP, the driver keeps the hands on the handle and depresses the accelerator pedal.
(3) After the start of the LCP, a predetermined time is exceeded (after the start of the LCP, the LCM cannot be started within a predetermined time).
(4) Before the start of the LCM, the vehicle speed falls below a predetermined speed (for example, about 50 km/h).
(5) After the start of the LCP and before the start of the LCM, there is no space in an adjacent lane necessary for the lane change.
(6) Before the start of the LCM, the lane marker is not detected.
(7) Before the start of the LCM, it is determined that there is no adjacent lane in the lane change direction, or that there is no adjacent lane within a certain distance ahead.
(8) Before the start of the LCM, it is determined that there is a curve having a predetermined curvature radius (for example, a curvature radius R is 250 m or less) within a certain distance ahead.
(9) Before the start of the LCM, it is determined that there is a section within a certain distance ahead where a type of the lane marker indicates that a lane change to an adjacent lane in the lane change direction is prohibited.
(10) Before the start of the LCM, the radar 12 detects shielding, radio interference, or an axial deviation.
(11) The hands-on alert is issued.
(12) The driver turns off the direction indicator.

When any one of these conditions is satisfied, the controller 8 stops the lane change control. The hands-on alert is issued when the driver does not keep the hands on the handle within a predetermined time of several seconds after the lane change assistance switch 67 is pressed.

On the other hand, when the lane change stop conditions are not satisfied, in step S508, the controller 8 controls the operation of the actuator 7 (in particular, the steering actuator 73) to laterally move the host vehicle 10 and then executes the lane change manoeuvre (LCM).

The lane change stop conditions are examples, are not limited to these conditions, and can be appropriately set such that the lane change is stopped if certain predetermined conditions are satisfied depending on the situation.

Upon completion of the LCM, the controller 8 turns off the direction indicator 44 and ends LCP in step S509. The direction indicator 44 may be turned off by a driver operation.

Upon completion of LCP, the controller 8 returns to step S501, and determines, based on the traveling information of the host vehicle 10, whether or not the lane change is further necessary for traveling according to the route. If the lane change is further necessary, the control of step S502 to step S510 is performed again. On the other hand, if no further lane change is necessary, the lane change control is stopped.

Although the vehicle speed limit control function and the steering control function provided in the driving assistance system 100 have been described above, these are examples of the autonomous driving control and are not necessarily limited to the above configurations and flows. That is, the driving assistance system in which control of notification operations of various alters described below is used is not limited to the driving assistance system that executes the above autonomous driving control.

Next, the control of the notification operations of various alters will be described.

The warning information notified to the driver by the presentation device 5 includes a forward looking alert, a primary hands-on alert, a secondary hands-on alert, a steering control release alert, a vehicle speed control/ steering control release alert, an approach alert, a collision alert, a lane departure alert, and the like.

The forward looking alert is notified when it is determined that the driver is not looking forward. The primary hands-on alert is notified when it is detected that the driver releases the hands from the handle in the hands-on mode. The secondary hands-on alert is notified when the driver is not looking forward for a predetermined time after the forward looking alert is notified, or when the driver does not hold the handle for a predetermined time after the primary hands-on alert is notified. The steering control release alert is notified when the steering control is released during the hands-off mode and prompts the driver to perform a handle operation. The vehicle speed control/ steering control release alert is notified when the vehicle speed control and the steering control is released during the hands-off mode and prompts the driver to perform a handle operation and a pedal operation. The approach alert is notified when it is determined that there is a risk of collision with a preceding vehicle. The collision alert is notified when an emergency brake (automatic brake control) is operated. The lane departure alert is notified when it is determined that the vehicle approaches a lane marker on a right side or a left side of the traveling lane.

Next, the details of the forward looking alert will be described.

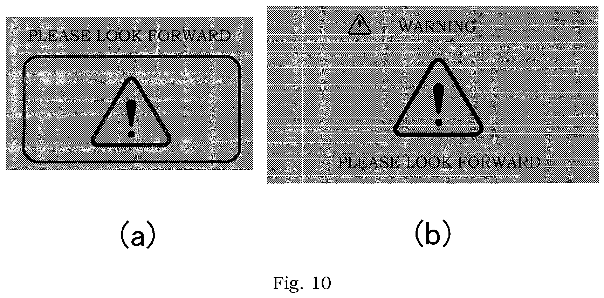

The forward looking alert is an alert that requests the driver to look forward by voice and display when it is detected that the driver is not looking forward (a traveling direction of the host vehicle 10) during the travelling of autonomous driving (during the steering control operation). For example, a warning screen as shown in FIG. 10 is displayed on the meter display 51 and the head-up display 52, and a warning is issued to the driver by voice from the speaker 53. (a) in FIG. 10 is an example of a warning screen displayed on the head-up display 52, and (b) in FIG. 10 is an example of a warning screen displayed on the meter display 51.

Although only the forward looking alert is notified during the hands-on mode, a secondary hands-on alert described later is notified when the driver does not look forward even after a predetermined time (for example, about 5 seconds) elapses after the forward looking alert is notified during the hands-off mode.

Here, if a warning is issued to the driver at all times when the driver is not facing forward, for example, for example, in a case where the driver is facing a lane direction when a lane change is planned, or in a case where the driver faces left or right for checking only, a warning will also be notified. That is, an unnecessary warning is issued.

Therefore, in this embodiment, first, even when the driver is not facing forward, for example, when the driver is facing the lane change direction, the notification (warning) of the forward looking alert is prohibited. That is, in this embodiment, during the lane change control, when the driver is not looking forward but is facing the lane change direction, the forward looking alert on the presentation device 5 is not notified. As a result, an unnecessary warning is reduced.

As for the lane change direction, when the direction indicator 44 is operating, a lighting (operation) direction of the direction indicator 44 is estimated to be the lane change direction. In this way, it is possible to determine whether or not prohibiting a warning is necessary based on only the information on the lighting direction of the direction indicator 44 and the orientation of the face of the driver, and no complicated processing is required.

In a case where the driving assistance system 100 proposes a lane change, it is conceivable that the driver checks a lane change direction before the direction indicator 44 is operated. Therefore, in this embodiment, in the case where the driving assistance system 100 proposes the lane change, when the driver is facing the direction of the lane change proposed by the system even before the direction indicator 44 is operated, the notification of the forward looking alert is prohibited. As a result, an unnecessary warning is further reduced.

In addition, in this embodiment, the forward looking alert is not notified until the time during which the driver is not facing forward exceeds a predetermined time. That is, in this embodiment, in a case where the time when the driver is not facing forward, such as when the driver is facing left and right for checking only, is a short time, that is, as long as the time during which the driver is not facing forward is not continued for a predetermined time, the forward looking alert is not notified. As a result, an unnecessary warning is further reduced.

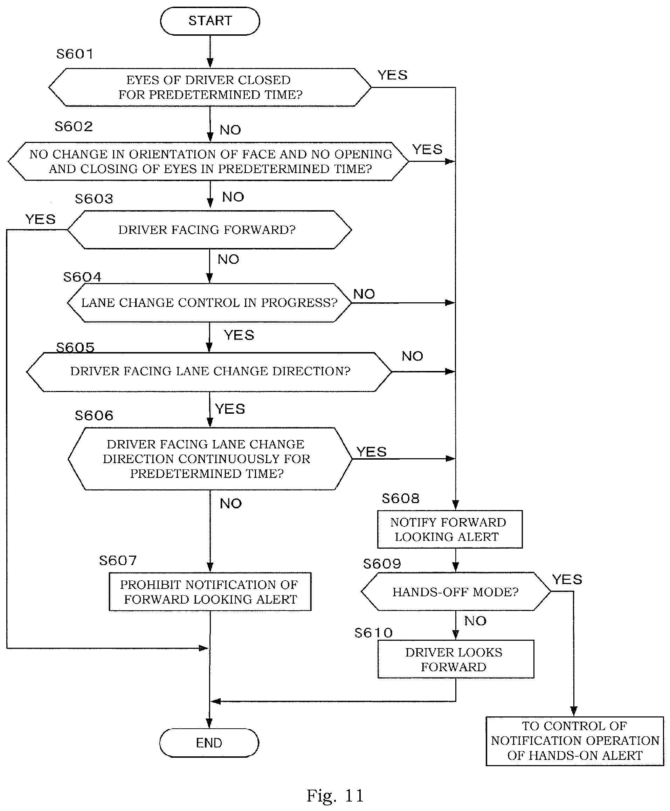

FIG. 11 is a flowchart illustrating control of a notification operation of the forward looking alert. The following control of the notification operation is repeatedly executed by the controller 8.

During the travelling of autonomous driving (the driving assistance control), in step S601, based on facial recognition information acquired by the driver monitoring camera 21, the controller 8 determines whether or not the eyes of the driver are closed for a predetermined time (for example, about 5 seconds).

When the controller 8 determines that the eyes of the driver are closed continuously for a predetermined time, the controller 8 estimates that the driver is not looking forward and proceeds to processing of step S608. In step S608, the controller 8 notifies the driver of the forward looking alert by the presentation device 5. The forward looking alert is notified by the display on the meter display 51 and the head-up display 52 and the voice from the speaker 53.

On the other hand, when the controller 8 determines that the eyes of the driver are opened or the time during which the eyes are closed does not exceeds a predetermined time in step S601, the controller 8 proceeds to processing of step S602.

In step S602, based on the facial recognition information acquired by the driver monitoring camera 21, the controller 8 determines whether or not the orientation of the face of the driver does not change and the eyes are not open or closed in a predetermined time (for example, about 60 seconds). When the orientation of the face of the driver does not change and the eyes are not opened or closed for a predetermined time, the controller 8 estimates that the driver is not looking forward, and proceeds to processing of step S608. In step S608, the controller 8 notifies the driver of the forward looking alert by the display and the voice of the presentation device 5.

On the other hand, when the driver changes the orientation of the face within a predetermined time or when the driver opens or closes the eyes within a predetermined time, the controller 8 proceeds to processing of step S603.

In step S603, based on the facial recognition information acquired by the driver monitoring camera 21, the controller 8 determines whether or not the driver is not facing forward (a traveling direction of the host vehicle 10) continuously for a predetermined time (a first predetermined time, for example, about 5 seconds). Specifically, when the following conditions are satisfied, the controller 8 determines that the driver is not facing forward continuously for a predetermined time.
(1) The driver faces leftward or rightward at a predetermined angle (for example, about 20 degrees) or more with respect to the traveling direction of the vehicle for a predetermined time (for example, about 5 seconds).
(2) The driver faces upward or downward at a predetermined angle (for example, about 20 degrees) or more with respect to a horizontal direction of the vehicle for a predetermined time (for example, about 5 seconds).

When any one of the conditions is satisfied, the controller 8 determines that the driver is not facing forward continuously for a predetermined time.

When the controller 8 determines that the driver is not facing forward continuously for a predetermined time in step S603, the controller 8 proceeds to processing of step S604. On the other hand, when the controller 8 determines that the driver is facing forward or the time during which the driver is not facing forward does not exceed the predetermined time, the forward looking alert is not notified, and the controller 8 ends the control of the notification operation of the forward looking alert.

The conditions used to determine whether the driver is not facing forward are examples, are not limited to these conditions, and can be appropriately set such that it is determined that the driver is not facing forward if certain predetermined conditions are satisfied depending on the situation.

In step S604, based on the traveling information of the host vehicle 10, the controller 8 determines whether or not the lane change control is in progress. As described above, the lane change control is started when the driver performs a direction indicator operation or when the driving assistance system 100 proposes a lane change. Therefore, based on operation information of the in-vehicle device 4 among the traveling information of the host vehicle 10, the controller 8 determines whether or not the lane change control is in progress depending on whether the direction indicator 44 operation is detected or whether the driving assistance system 100 proposes a lane change to the driver.

When the controller 8 determines that the lane change control is not in progress in step S604, the controller 8 proceeds to processing of step S608 and notifies the driver of the forward looking alert by the display and voice of the presentation device 5.

On the other hand, when the controller 8 determines that the lane change control is in progress in step S604, the controller 8 proceeds to processing of step S605. In step S605, the controller 8 determines whether or not the driver is facing the lane change direction based on the travel information of the host vehicle 10. When the direction indicator 44 is operating, the controller 8 estimates that the lighting direction of the direction indicator 44 is the lane change direction. On the other hand, when the direction indicator 44 is not turned on, the controller 8 sets a direction toward a lane in a change destination proposed by the driving assistance system 100 as the lane change direction. The orientation of the face of the driver is determined based on the facial recognition information acquired by the driver monitoring camera 21.

When the controller 8 determines that the driver is not facing the lane change direction in step S605, the controller 8 proceeds to processing of step S608 and notifies the driver of the forward looking alert by the display and voice of the presentation device 5.

On the other hand, when the controller 8 determines that the driver is facing the lane change direction in step S605, the controller 8 does not notify the driver of the forward looking alert and proceeds to processing of step S606.

In step S606, based on the traveling information of the host vehicle 10, the controller 8 determines whether or not the driver is facing the lane change direction continuously for a predetermined time (a second predetermined time). When it is determined that the driver is facing the lane change direction continuously for a predetermined time, the controller 8 proceeds to processing of step S608 and notifies the forward looking alert. This is because the driver is facing the lane change direction for more than a certain time, which is dangerous as in the case of the distracted driving.

The predetermined time (the second predetermined time) is set to be longer than the predetermined time (the first predetermined time, for example, about 5 seconds) in step S603.

When the controller 8 detects that the driver faces forward within the predetermined time (the second predetermined time) in step S606, the controller 8 prohibits the notification of the forward looking alert in step S607.

As described above, when the driver performs the direction indicator operation, the controller 8 detects that the direction indicator 44 is operated, and prohibits the notification (warning) of a forward looking alert when the driver is facing the lane change direction after the direction indicator 44 is operated. In addition, in a case where the controller 8 determines whether a lane change is necessary and notifies the driver of the lane change if it is determined that the lane change is necessary, that is, in a case where the driving assistance system 100 proposes a lane change, the notification (the warning) of the forward looking alert is prohibited when the driver is facing the lane change direction after the driver is notified of the lane change.

After the forward looking alert is notified in step S608, the controller 8 determines whether or not the vehicle is in the hands-off mode in step S609. In the case of the hands-off mode, the controller 8 proceeds to control of the notification operation of the hands-on alert (step S810) described later. On the other hand, in the case of the hands-on mode (the driver keeps the hands on the handle), the controller 8 stops the notification of the forward looking alert when the controller 8 detects that the driver looks forward in step S610.

In the control of the notification operation of the forward looking alert, the controller 8 determines whether the driver is looking forward based on whether the eyes of the driver are closed, whether or not the orientation of the face of the driver does not change and the eyes are not open or closed in a predetermined time, and whether the driver is facing forward. However, the conditions for determining whether or not the driver is looking forward are not limited thereto, and can be appropriately set such that it is determined that the driver is not looking forward if certain predetermined conditions are satisfied depending on the situation. For example, step S601 (whether the eyes of the driver are closed) or step S602 (whether or not the orientation of the face of the driver does not change and the eyes are not opened or closed in a predetermined time) may be omitted as appropriate, or the processing order of steps S601, S602 and steps S603 to S606 may be changed.

Next, the details of the hands-on alert will be described. The hands-on alert is issued during the travelling of autonomous driving (during the steering control operation) and includes the primary hands-on alert and the secondary hands-on alert.

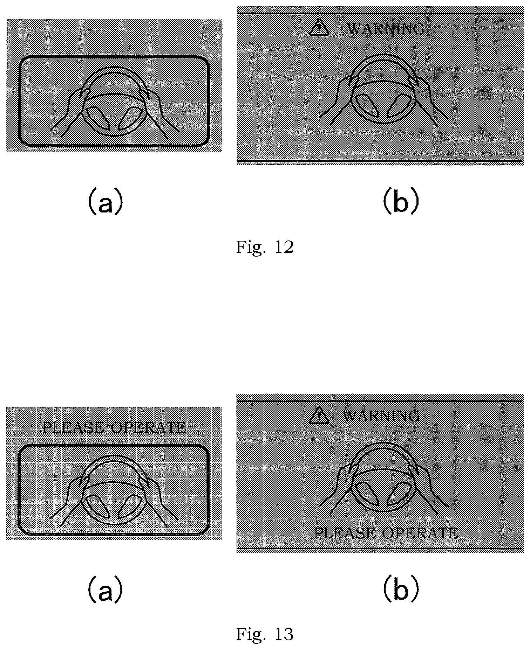

The primary hands-on alert is notified when it is detected that the driver releases the hands from the handle in the hands-on mode, and requests the driver to perform a handle operation by a display. The primary hands-on alert prompts the driver to perform a handle operation by displaying, for example, a warning screen as illustrated in FIG. 12 on the meter display 51 and the head-up display 52. (a) in FIG. 12 is an example of a warning screen displayed on the head-up display 52, and (b) in FIG. 12 is an example of a warning screen displayed on the meter display 51.

The secondary hands-on alert is notified when the driver is not looking forward continuously for a predetermined time (a fourth predetermined time, for example, about 5 seconds) after the forward looking alert is notified, or when the driver does not hold the handle continuously for the predetermined time (the fourth predetermined time, for example, about 5 seconds) after the primary hands-on alert is notified. The secondary hands-on alert requests the driver to perform a handle operation by a display, a voice, and a warning brake (slowly operating a brake for plural times in a short time). The driver is prompted to perform a handle operation by displaying, for example, warning screens as illustrated in FIG. 13 on the meter display 51 and the head-up display 52, and by voice from the speaker 53 and slow braking (the warning brake) in a short time. (a) in FIG. 13 is an example of a warning screen displayed on the head-up display 52, and (b) in FIG. 13 is an example of a warning screen displayed on the meter display 51.

If the secondary hands-on alert is always notified after the forward looking alert is notified, the secondary hands-on alert may also be notified in the hands-off mode when the driver looks forward immediately after the forward looking alert is notified. That is, an unnecessary warning is issued. Therefore, in this embodiment, in the hands-off mode, even after the forward looking alert is notified, when the driver looks forward within a predetermined time (s third predetermined time) shorter than the fourth predetermined time, the secondary hands-on alert is not notified. That is, as described above, when the forward looking alert is notified in the hands-off mode, if the driver looks forward within a predetermined time, the hands-off mode is not released. Thus, in this embodiment, in the hands-off mode, even after the forward looking alert is notified, if the driver looks forward within the predetermined time (the third predetermined time), the hands-off mode is not released and the secondary hands-on alert is not notified. As a result, an unnecessary warning is further reduced.

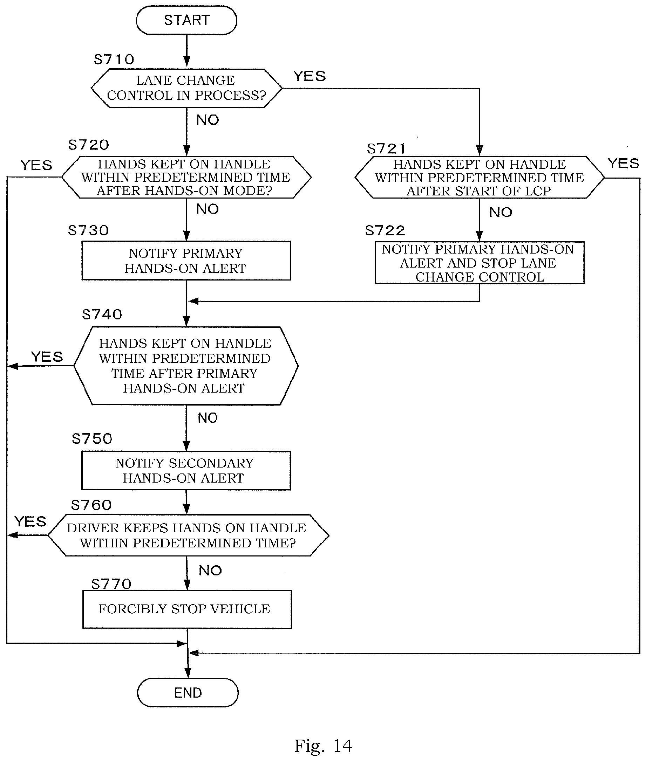

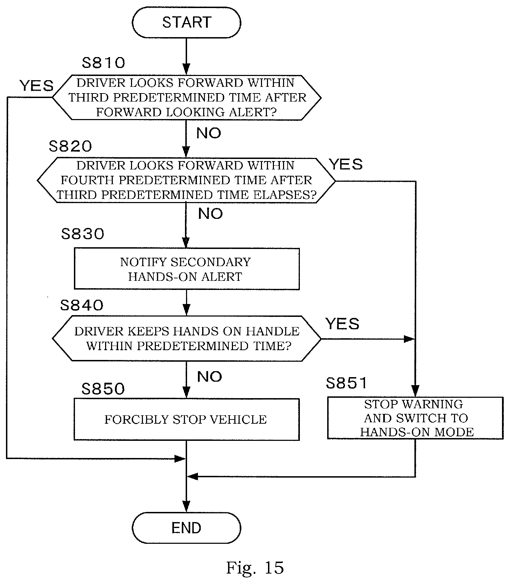

FIG. 14 and FIG. 15 are flowcharts illustrating control of a notification operation of a hands-on alert. The control of the notification operation of the hands-on alert is started when a mode is switched to the hands-on mode (or the steering control is started and the hands-on mode is started) and when the forward looking alert is notified in the hands-off mode.

FIG. 14 is a flowchart illustrating control of a notification operation of a hands-on alert that is started when the mode is switched to the hands-on mode. The following control of the notification operation is repeatedly executed by the controller 8.

When the mode is switched to the hands-on mode (or the hands-on mode is started) during the autonomous driving, in step S710, the controller 8 determines whether or not the lane change control is in progress based on the traveling information. As described above, the lane change control is started when the driver performs an operation or when the driving assistance system 100 proposes a lane change. In a case where the lane change control is not in progress (that is, in a case where the lane center keeping control is in progress), the controller 8 proceeds to processing of step S720.

In step S720, based on the traveling information (driver state information acquired by the touch sensor 22), the controller 8 determines whether or not the driver keeps the hands on the handle within a predetermined time (for example, within about 5 seconds) in the hands-on mode. When the driver keeps the hands on the handle within the predetermined time, it is not necessary to notify a hands-on alert, and thus the controller 8 ends the control of the notification operation of the hands-on alert.

On the other hand, when the driver releases the hands from the handle continuously for a predetermined time in the hands-on mode, the controller 8 notifies the primary hands-on alert in step S730. The primary hands-on alert prompts the driver to perform a handle operation by the display on the presentation device 5.

Next, in step S740, based on the traveling information of the host vehicle 10 (the driver state information acquired by the touch sensor 22), the controller 8 determines whether or not the driver keeps the hands on the handle within a predetermined time (for example, within about 5 seconds) after the notification of the primary hands-on alert.

In step S740, when the controller 8 determines that the driver keeps the hands on the handle within the predetermined time after the notification of the primary hands-on alert, the controller 8 stops the primary hands-on alert.

On the other hand, when the driver releases the hands from the handle continuously for a predetermined time in step S740, the controller 8 proceeds to processing of step S750, and the secondary hands-on alert is notified. The secondary hands-on alert is notified by the display, the voice, and the warning brake. That is, the controller 8 prompts the driver to perform a handle operation by notifying the driver by the display and the voice of the presentation device 5 and controlling the brake actuator 72 to operate the brake plural times.

Next, in step S760, based on the traveling information (the driver state information acquired by the touch sensor 22), the controller 8 determines whether or not the driver keeps the hands to the handle within a predetermined time (for example, within about 5 seconds). When the driver keeps the hands on the handle within the predetermined time (the handle operation is performed), the controller 8 stops the secondary hands-on alert.

On the other hand, when it is determined that the driver releases the hands from the handle continuously for a predetermined time in step S760, the controller 8 controls the brake actuator 72 to decelerate and forcibly stop the host vehicle 10 in step S770.

Next, in step S804, based on the traveling information (the driver state information acquired by the touch sensor 22), the controller 8 determines whether or not the driver keeps the hands to the handle within a predetermined time (a fifth predetermined time, for example, within about 5 seconds). When the driver keeps the hands on the handle within the predetermined time (the handle operation is performed), the controller 8 stops the secondary hands-on alert.

When the controller 8 determines that the lane change control is in progress in step S710, the controller 8 proceeds to processing of step 5721.

In step S721, based on the traveling information, the controller 8 determines whether or not the driver keeps the hands on the handle within a predetermined time (for example, within about 2 seconds) after the start of the lane change procedure (LCP). When the driver keeps the hands on the handle within a predetermined time after the start of the LCP, the controller 8 ends the control of the notification operation of the hands-on alert.

On the other hand, when the driver releases the hands from the handle continuously for a predetermined time after the start of the LCP, in step S722, the controller 8 notifies the primary hands-on alert and stops the lane change control.

When the primary hands-on alert is notified in step S722, the controller 8 next proceeds to processing of step S740, and determines, based on the traveling information of the host vehicle 10, whether or not the driver keeps the hands on the handle within a predetermined time (for example, within about 5 seconds) after the notification of the primary hands-on alert. When the driver releases the hands from the handle continuously for a predetermined time, the controller 8 proceeds to processing of step S750, and the secondary hands-on alert is notified. When the driver releases the hands from the handle continuously for a predetermined time even if the secondary hands-on alert is notified, the controller 8 forcibly stops the host vehicle 10 (step S770).

FIG. 15 is a flowchart illustrating control of a notification operation of a hands-on alert that is started when the forward looking alert is notified in the hands-off mode. The case where the forward looking alert is notified in the hands-off mode is the case where it is determined in step S609 of FIG. 11 that the vehicle is in the hands-off mode. The following control of the notification operation is repeatedly executed by the controller 8.

When the forward looking alert is notified in the hands-off mode, in step S810, the controller 8 determines, based on the facial recognition information acquired by the driver monitoring camera 21, whether or not the driver looks forward (in the traveling direction of the host vehicle 10) within a predetermined time after the forward looking alert is notified. Whether the driver looks forward is determined depending on whether the driver changes the orientation of the face to the traveling direction of the vehicle or whether the eyes are not closed for a predetermined time or longer. When the driver changes the orientation of the face to the traveling direction and the eyes are not closed for a predetermined time or longer, the controller 8 determines that the driver looks forward.

When the driver looks forward within the predetermined time (the third predetermined time) in step S810, the controller 8 stops the forward looking alert and prohibits the notification of the hands-on alert, and the hands-off mode is continued. On the other hand, when the driver does not look forward continuously for a predetermined time in step S810, the controller 8 proceeds to processing of step S820.

In step S820, based on the facial recognition information acquired by the driver monitoring camera 21, the controller 8 determines whether or not the driver looks forward within the predetermined time (the fourth predetermined time) after the third predetermined time elapses, after the forward looking alert is notified. When the driver looks forward within the fourth predetermined time, the controller 8 switches the mode to the hands-on mode and stops the notification of the forward looking alert in step S851.

On the other hand, when the driver does not look forward within the fourth predetermined time in step 820, the controller 8 proceeds to processing of step S830.

In step S830, the controller 8 notifies the driver of the secondary hands-on alert. The secondary hands-on alert is notified by the display and the voice of the presentation device 5 and the warning brake.

Next, in step S840, based on the traveling information (the driver state information acquired by the touch sensor 22), the controller 8 determines whether or not the driver keeps the hands to the handle within the predetermined time (the fifth predetermined time, for example, within about 5 seconds). When the driver keeps the hands on the handle within the predetermined time (the handle operation is performed), the controller 8 stops the forward looking alert and the secondary hands-on alert, and continues the autonomous driving as the hands-on mode in step S851.

On the other hand, when it is determined that the driver releases the hands from the handle continuously for the predetermined time (the fifth predetermined time) in step S840, the controller 8 controls the brake actuator 72 to decelerate and forcibly stop the host vehicle 10 in step S850.

According to the driving assistance system 100 of the embodiment described above, the following effects can be obtained.

In the driving assistance system 100, the controller 8 acquires the state information of the driver during the travelling of autonomous driving (during execution of the steering control), and notifies the driver of the forward looking alert (warning) when the driver is not facing forward based on the state information of the driver. However, when the driver is facing the lane change direction, the forward looking alert is prohibited. That is, in the case where the driver is not facing forward, for example, when the driver is facing the lane change direction, the driver is also not notified (warned) of the forward looking alert. As a result, an unnecessary warning is reduced. In addition, the controller 8 determines whether or not prohibiting the forward looking alert (warning) is necessary based on only the lane change direction and the state information of the driver (the orientation of the face of the driver), and no complicated processing is required to determine whether or not prohibiting the warning is necessary. Therefore, it is possible to provide a driving assistance method and a driving assistance system capable of reducing an unnecessary warning by a simple method.

In addition, when the driver is not facing forward and the lane change direction at the time of the lane change, the driving assistance system 100 issues the forward looking alert (warning). If all forward looking alerts (warnings) are prohibited when the driver is not facing forward at the time of the lane change, the warning is also prohibited when the driver is not facing forward and the lane change direction. On the other hand, the driving assistance system 100 of this embodiment also issues the forward looking alert (warning) for an act of distracted driving in which the driver does not face forward and the lane change direction at the time of the lane change. As a result, as compared with the case where all warnings are prohibited at the time of the lane change, it is possible to prevent the act of distracted driving in which the driver does not face forward and the lane change direction.

The driving assistance system 100 detects an operation state of the direction indicator 44, and prohibits the forward looking alert (warning) when the driver is facing the lighting (operation) direction of the direction indicator 44. In this way, the controller 8 determines whether or not prohibiting the forward looking alert (warning) is necessary based on only the lighting direction of the direction indicator 44 and the state information of the driver (the orientation of the face of the driver), and no complicated processing is required to determine whether or not prohibiting the warning is necessary. Therefore, an unnecessary warning can be reduced by a simple method.

When the driver is not facing forward and the lighting direction of the direction indicator 44 at the time of turning on the direction indicator 44, the driving assistance system 100 issues the forward looking alert (warning). As a result, as compared with the case where all warnings are prohibited at the time of turning on the direction indicator 44, it is possible to prevent the act of distracted driving in which the driver does not face forward and the lighting direction of the direction indicator.

The driving assistance system 100 determines whether or not a lane change of the vehicle is necessary, and proposes (notifies) the driver of a lane change when determining that the lane change is necessary. Then, after the driver is notified of the lane change, when the driver is facing the lane change direction, the forward looking alert (warning) is prohibited. In this way, in the case where the lane change is proposed by the driving assistance system 100, when the driver is facing the lane change direction before the direction indicator 44 is turned on, the forward looking alert (warning) is also prohibited. Therefore, an unnecessary warning can be further reduced.

The driving assistance system 100 issues the forward looking alert (warning) to the driver when the driver drives the vehicle while not facing forward for the first predetermined time or longer. In this way, the forward looking alert is not notified until the time during which the driver is not facing forward is equal to or longer than the first predetermined time. Therefore, for example, it is possible to prevent a warning from being issued in a case where the time when the driver is not facing forward, such as when the driver is facing left and right for checking only, is a short time. That is, an unnecessary warning can be further reduced. In addition, when the driver is facing the lane change direction, the driving assistance system 100 does not notify the forward looking alert (prohibit the warning) until the time during which the driver is facing the lane direction exceeds the second predetermined time longer than the first predetermined time. In this way, when the driver is facing the lane change direction, the warning is prohibited until the second predetermined time longer than the first predetermined time is exceeded. Therefore, an unnecessary warning is reduced. Furthermore, when the driver is facing the lane change direction beyond the second predetermined time, the forward looking alert (warning) is issued. As a result, it is possible to prevent the driver from not looking forward for a long time at the time of the lane change.

The driving assistance system 100 includes a hands-off mode executed in a state where the driver releases the hands from the handle, and a hands-on mode executed in a state where the driver keeps the hands on the handle. Further, in the hands-off mode, after the driver is notified of the forward looking alert (warning), the hands-off mode is continued when the driver faces forward within a predetermined time. Further, when the driver faces forward after a predetermined time elapses, the travelling of autonomous driving is continued under a hands-on state. In this way, since the hands-off mode is continued when the driver faces forward within a predetermined time after the forward looking alert is notified, it is possible to reduce the notification of an unnecessary hands-on alert (a warning for prompting the driver to perform the handle operation). Therefore, an unnecessary warning can be further reduced.

The driving assistance system 100 operates the brake plural times to warn the driver when the driver is not facing forward even after the predetermined time after the forward looking alert (warning) is issued to the driver in the hands-off mode. In addition, after the brake is operated plural times to warn the driver, the brake is further operated to forcibly stop the vehicle when the driver does not hold the handle even after the predetermined time elapses. As a result, it is possible to prevent an accident that may occur due to the driver not looking forward.

Not all control flow steps described in this embodiment must be performed, and these control flow steps may be omitted as appropriate at the time of realizing the invention. The processing order can also be changed as appropriate.

Although the embodiment of the present disclosure has been described above, this embodiment is merely a part of application examples of the present disclosure and does not limit the technical scope of the present disclosure to a specific configuration of this embodiment.

According to another particular aspect of the invention, a driving assistance method of, by a controller, acquiring state information of a driver during travelling of autonomous driving and issuing a warning to the driver when the controller determines that the driver is not facing forward based on the state information of the driver, is provided. The driving assistance method comprises prohibiting a warning when the driver is facing a lane change direction during the travelling of autonomous driving.

Preferably, the driving assistance method further comprises the steps of determining whether or not a lane change of a vehicle is necessary, notifying the driver of the lane change when it is determined that the lane change is necessary, and prohibiting the warning when the driver is facing the lane change direction after the driver is notified of the lane change.

Also preferably, the driving assistance method further comprises the steps of detecting an operation state of a direction indicator and prohibiting the warning when the driver is facing the lane change direction after the direction indicator is operated, wherein the lane change direction is an operation direction of the direction indicator.

Preferably, the warning is issued to the driver when the driver drives the vehicle while not facing forward for a first predetermined time or longer and when the driver is facing the lane change direction, the warning is prohibited until a time during which the driver is facing the lane change direction exceeds a second predetermined time longer than the first predetermined time.

Preferably, for the travelling of autonomous driving, a hands-off mode executed in a state where the driver releases hands from a handle is provided and the hands-off mode is permitted while the warning is not issued to the driver.

Preferably, for the travelling of autonomous driving, a hands-on mode executed in a state where the driver keeps the hands on the handle is further provided and in the hands-off mode, after the warning is issued to the driver, the hands-off mode is continued when the driver faces forward within a third predetermined time, and the travelling of autonomous driving is continued under the hands-on mode when the driver faces forward within a fourth predetermined time after the third predetermined time elapses.

More preferably, a warning is issued to the driver by operating a brake a plurality of times when the driver is not facing forward even after the fourth predetermined time elapses after the warning is issued to the driver in the hands-off mode.

Still more preferably, a detection unit configured to detect that the driver keeps hands on a handle is provided and after the brake is operated a plurality of times to warn the driver, the brake is further operated to forcibly stop a vehicle when the driver does not hold the handle even after a fifth predetermined time elapses.

According to still another particular aspect of the invention, a driving assistance system is provided. The driving assistance system comprises a sensor configured to detect a state of a driver during travelling of autonomous driving and a controller configured to issue a warning to the driver when it is determined that the driver is not facing forward based on the state of the driver detected by the sensor. The controller prohibits the warning when the driver is facing a lane change direction during the travelling of autonomous driving.

## Claims

1. A driving assistance method of, by a controller (8), acquiring state information of a driver during travelling of autonomous driving and issuing a forward looking alert to the driver that requests the driver to look forward when the controller (8) determines that the driver is not facing forward based on the state information of the driver,
**characterized in that**
for the travelling of autonomous driving, a hands-on mode in which a hands-on warning is issued when it is detected that the driver releases the hands from the handle, and a hands-off mode in which the hands-on warning is not issued even if the driver is detected to release the hands from the handle are provided, and
the hands-off mode is started when the driving state of the vehicle satisfies a predetermined condition,
in the hands-off mode, when the driver faces forward after the forward looking alert is issued to the driver, the hands-off mode is continued, and when the driver is not facing forward, a secondary hands-on warning is issued to prompt the driver to perform the handle operation, and if the driver keeps the hands on the handle after the secondary hands-on warning has been issued, the travelling of autonomous driving is continued in the hands-on mode.

2. The driving assistance method according to claim 1, further comprising:
determining whether or not a lane change of a vehicle (10) is necessary;
notifying the driver of the lane change when it is determined that the lane change is necessary; and
prohibiting the forward looking alert when the driver is facing the lane change direction after the driver is notified of the lane change.

3. The driving assistance method according to claim 1, further comprising:
detecting an operation state of a direction indicator (44); and
prohibiting the forward looking alert when the driver is facing the lane change direction after the direction indicator (44) is operated, wherein
the lane change direction is an operation direction of the direction indicator (44).

4. The driving assistance method according to any one of claims 1 to 3, wherein
the forward looking alert is issued to the driver when the driver drives the vehicle (10) while not facing forward for a first predetermined time or longer, and
when the driver is facing the lane change direction, the forward looking alert is prohibited until a time during which the driver is facing the lane change direction exceeds a second predetermined time longer than the first predetermined time.

5. The driving assistance method according to any one of claims 1 to 4, wherein the hands-off mode is permitted while the forward looking alert is not issued to the driver.

6. The driving assistance method according to any of claims 1 to 5, wherein a warning is issued to the driver by operating a brake a plurality of times when the driver is not facing forward even after a fourth predetermined time elapses after the forward looking alert is issued to the driver in the hands-off mode.

7. The driving assistance method according to claim 6, wherein
a detection unit (22) configured to detect that the driver keeps hands on a handle is provided, and
after the brake is operated a plurality of times to warn the driver, the brake is further operated to forcibly stop a vehicle (10) when the driver does not hold the handle even after a fifth predetermined time elapses.

8. A driving assistance system, comprising:
a sensor (2) configured to detect a state of a driver during travelling of autonomous driving; and
a controller (8) configured to issue a forward looking alert to the driver that requests the driver to look forward when it is determined that the driver is not facing forward based on the state of the driver detected by the sensor (2),
**characterized in that**
for the travelling of autonomous driving, a hands-on mode in which a hands-on warning is issued when it is detected that the driver releases the hands from the handle, and a hands-off mode in which the hands-on warning is not issued even if the driver is detected to release the hands from the handle, are provided; and
the hands-off mode is started when the running state of the vehicle satisfies a predetermined condition,
in the hands-off mode, when the driver faces forward after the forward looking alert is issued to the driver, the hands-off mode is continued, and when the driver is not facing forward, a secondary hands-on warning is issued to prompt the driver to perform the handle operation, and if the driver keeps the hands on the handle after the secondary hands-on warning has been issued, the travelling of autonomous driving is continued in the hands-on mode.

## Patentansprüche

1. Fahrassistenz-Verfahren, bei dem mit einer Steuerungseinrichtung (8) Status-^ Informationen über einen Fahrer bei Fahrt in autonomem Fahrbetrieb erfasst werden und eine Warnmeldung zum Blicken nach vorn an den Fahrer ausgegeben wird, mit der der Fahrer zum Blicken nach vorn aufgefordert wird, wenn die Steuerungseinrichtung (8) auf Basis der Status-Informationen über den Fahrer feststellt, dass der Fahrer nicht nach vorn blickt,
**dadurch gekennzeichnet, dass**
für die Fahrt in autonomem Fahrbetrieb ein Hand-Modus, in dem eine Warnmeldung zum Auflegen der Hände ausgegeben wird, wenn erfasst wird, dass der Fahrer die Hände von dem Bedienelement nimmt; und ein Freihand-Modus existieren, in dem die Warnmeldung zum Auflegen der Hände selbst dann nicht ausgegeben wird, wenn erfasst wird, dass der Fahrer die Hände von dem Bedienelement nimmt, und
der Freihand-Modus gestartet wird, wenn der Fahr-Status des Fahrzeugs eine vorgegebene Bedingung erfüllt,
in dem Freihand-Modus, wenn der Fahrer nach Ausgeben der Warnmeldung zum Blicken nach vorn an den Fahrer nach vorn blickt, der Freihand-Modus fortgesetzt wird, und, wenn der Fahrer nicht nach vorn blickt, eine sekundäre Warnmeldung zum Auflegen der Hände ausgegeben wird, mit der der Fahrer zum Durchführen der Betätigung des Bedienelementes aufgefordert wird, und, wenn der Fahrer die Hände auf dem Bedienelement hält, nachdem die sekundäre Warnmeldung zum Auflegen der Hände ausgegeben worden ist, die Fahrt in autonomem Fahrbetrieb in dem Hand-Modus fortgesetzt wird.

2. Fahrassistenz-Verfahren nach Anspruch 1, das des Weiteren umfasst:
Feststellen, ob eine Fahrspuränderung eines Fahrzeugs (10) erforderlich ist;
Benachrichtigen des Fahrers über die Fahrspuränderung, wenn festgestellt wird, dass die Fahrspuränderung erforderlich ist; und
Unterbinden der Warnmeldung zum Blicken nach vorn, wenn der Fahrer in die Richtung der Fahrspuränderung blickt, nachdem der Fahrer über die Fahrspuränderung benachrichtigt worden ist.

3. Fahrassistenz-Verfahren nach Anspruch 1, das des Weiteren umfasst:
Erfassen eines Betätigungszustandes eines Fahrtrichtungsanzeigers (44); und
Unterbinden der Warnmeldung zum Blicken nach vorn, wenn der Fahrer in die Richtung der Fahrspuränderung blickt, nachdem der Fahrtrichtungsanzeiger (44) betätigt worden ist, wobei
die Richtung der Fahrspuränderung eine Betätigungsrichtung des Fahrtrichtungsanzeigers (44) ist.

4. Fahrassistenz-Verfahren nach einem der Ansprüche 1 bis 3, wobei
die Warnmeldung zum Blicken nach vorn an den Fahrer ausgegeben wird, wenn der Fahrer das Fahrzeug (10) fährt und dabei über eine erste vorgegebene Zeit oder länger nicht nach vorn blickt, und
wenn der Fahrer in die Richtung der Fahrspuränderung blickt, die Warnmeldung zum Blicken nach vorn unterbunden wird, bis eine Zeit, während der der Fahrer in die Richtung der Fahrspuränderung blickt, eine zweite vorgegebene Zeit überschreitet, die länger ist als die erste vorgegebene Zeit.

5. Fahrassistenz-Verfahren nach einem der Ansprüche 1 bis 4, wobei der Freihand-Modus zugelassen wird, wenn die Warnmeldung zum Blicken nach vorn nicht an den Fahrer ausgegeben wird.

6. Fahrassistenz-Verfahren nach einem der Ansprüche 1 bis 5, wobei eine Warnmeldung an den Fahrer ausgegeben wird, indem eine Bremse mehrmals betätigt wird, wenn der Fahrer auch dann nicht nach vorn blickt, nachdem eine vierte vorgegebene Zeit nach Ausgeben der Warnmeldung zum Blicken nach vorn an den Fahrer in dem Freihand-Modus verstrichen ist.

7. Fahrassistenz-Verfahren nach Anspruch 6, wobei
eine Erfassungs-Einheit (22) vorhanden ist, die so ausgeführt ist, dass sie erfasst, dass der Fahrer die Hände auf einem Bedienelemente hält, und
nachdem die Bremse mehrmals betätigt worden ist, um den Fahrer zu warnen, die Bremse weiter betätigt wird, um ein Fahrzeug (10) zwangsweise zum Halten zu bringen, wenn der Fahrer auch nach Verstreichen einer fünften vorgegebenen Zeit das Bedienelement nicht hält.

8. Fahrassistenz-System, das umfasst:
einen Sensor (2), der so ausgeführt ist, dass er einen Status eines Fahrers bei Fahrt in autonomem Fahrbetrieb erfasst; und
eine Steuerungseinrichtung (8), die so ausgeführt ist, dass sie eine Warnmeldung zum Blicken nach vorn an den Fahrer ausgibt, mit der der Fahrer zum Blicken nach vorn aufgefordert wird, wenn auf Basis des durch den Sensor (2) erfassten Status des Fahrers festgestellt wird, dass der Fahrer nicht nach vorn blickt,
**dadurch gekennzeichnet, dass**
für die Fahrt in autonomem Fahrbetrieb ein Hand-Modus, in dem eine Warnmeldung zum Auflegen der Hände ausgegeben wird, wenn erfasst wird, dass der Fahrer die Hände von dem Bedienelement nimmt; und ein Freihand-Modus existieren, in dem die Warnmeldung zum Auflegen der Hände selbst dann nicht ausgegeben wird, wenn erfasst wird, dass der Fahrer die Hände von dem Bedienelement nimmt; und
der Freihand-Modus gestartet wird, wenn der Fahr-Status des Fahrzeugs eine vorgegebene Bedingung erfüllt,
in dem Freihand-Modus, wenn der Fahrer nach Ausgeben der Warnmeldung zum Blicken nach vorn an den Fahrer nach vorn blickt, der Freihand-Modus fortgesetzt wird, und, wenn der Fahrer nicht nach vorn blickt, eine sekundäre Warnmeldung zum Auflegen der Hände ausgegeben wird, mit der der Fahrer zum Durchführen der Betätigung des Bedienelementes aufgefordert wird, und, wenn der Fahrer die Hände auf dem Bedienelement hält, nachdem die sekundäre Warnmeldung zum Auflegen der Hände ausgegeben worden ist, die Fahrt in autonomem Fahrbetrieb in dem Hand-Modus fortgesetzt wird.

## Revendications

1. Procédé d'assistance à la conduite consistant en l'acquisition, par un contrôleur (8), d'information sur l'état d'un conducteur pendant une circulation en conduite autonome, et en l'envoi au conducteur d'une alerte de regard vers l'avant qui demande au conducteur de regarder vers l'avant quand le contrôleur (8) détermine que le conducteur n'est pas tourné vers l'avant sur la base de l'information sur l'état du conducteur,
**caractérisé en ce que**
pour la circulation en conduite autonome, un mode de conduite manuelle est pourvu où un avertissement de conduite manuelle est envoyé quand il est détecté que les mains du conducteur lâchent le volant, et un mode mains libres est pourvu où l'avertissement de conduite manuelle n'est pas envoyé même s'il est détecté que les mains du conducteur lâchent le volant, et
le mode mains libres est activé quand l'état de conduite du véhicule satisfait une condition prédéterminée,
en mode mains libres, quand le conducteur est tourné vers l'avant après l'envoi au conducteur de l'alerte de regard vers l'avant, le mode mains libres est maintenu, et quand le conducteur n'est pas tourné vers l'avant, un avertissement de conduite manuelle secondaire est envoyé pour inciter le conducteur à actionner le volant, et si le conducteur garde les mains sur le volant après l'envoi de l'avertissement de conduite manuelle secondaire, la circulation en conduite autonome est poursuivie dans le mode de conduite manuelle.

2. Procédé d'assistance à la conduite selon la revendication 1, comprenant en outre :
la détermination du fait qu'un changement de voie du véhicule (10) est nécessaire ou non ;
la notification du changement de voie au conducteur quand il est déterminé que le changement de voie est nécessaire ; et
l'inactivation de l'alerte de regard vers l'avant quand le conducteur est tourné dans la direction de changement de voie après que le conducteur a été notifié du changement de voie.

3. Procédé d'assistance à la conduite selon la revendication 1, comprenant en outre :
la détection de l'état de fonctionnement d'un indicateur de direction (44) ; et
l'inactivation de l'alerte de regard vers l'avant quand le conducteur est tourné dans la direction de changement de voie après l'actionnement de l'indicateur de direction (44),
dans lequel la direction de changement de voie est une direction d'actionnement de l'indicateur de direction (44).

4. Procédé d'assistance à la conduite selon l'une quelconque des revendications 1 à 3, dans lequel
l'alerte de regard vers l'avant est envoyée au conducteur quand le conducteur conduit le véhicule (10) sans être tourné vers l'avant pendant une durée supérieure ou égale à une première durée prédéterminée, et
quand le conducteur est tourné dans la direction de changement de voie, l'alerte de regard vers l'avant est inactivée jusqu'à ce que la durée pendant laquelle le conducteur est tourné dans la direction de changement de voie dépasse une deuxième durée prédéterminée supérieure à la première durée prédéterminée.

5. Procédé d'assistance à la conduite selon l'une quelconque des revendications 1 à 4, dans lequel le mode mains libres est autorisé tant que l'alerte de regard vers l'avant n'est pas envoyée au conducteur.

6. Procédé d'assistance à la conduite selon l'une quelconque des revendications 1 à 5, dans lequel un avertissement est envoyé au conducteur en actionnant plusieurs fois un frein quand le conducteur n'est pas tourné vers l'avant même après qu'une quatrième durée prédéterminée s'est écoulée après que l'alerte de regard vers l'avant a été envoyée au conducteur dans le mode mains libres.

7. Procédé d'assistance à la conduite selon la revendication 6, dans lequel
une unité de détection (22) configurée pour détecter que le conducteur garde les mains sur un volant est pourvue, et
après que le frein a été actionné plusieurs fois pour avertir le conducteur, le frein est actionné de nouveau pour forcer l'arrêt du véhicule (10) quand le conducteur ne tient pas le volant même après l'écoulement d'une cinquième durée prédéterminée.

8. Système d'assistance à la conduite, comprenant :
un capteur (2) configuré pour détecter l'état d'un conducteur pendant une circulation en conduite autonome ; et
un contrôleur (8) configuré pour envoyer une alerte de regard vers l'avant au conducteur, qui demande au conducteur de regarder vers l'avant quand il est déterminé que le conducteur n'est pas tourné vers l'avant sur la base de l'état du conducteur détecté par le capteur (2),
**caractérisé en ce que**
pour la circulation en conduite autonome, un mode de conduite manuelle est pourvu où un avertissement de conduite manuelle est envoyé quand il est détecté que les mains du conducteur lâchent le volant, et un mode mains libres est pourvu où l'avertissement de conduite manuelle n'est pas envoyé même s'il est détecté que les mains du conducteur lâchent le volant ; et
le mode mains libres est activé quand l'état de fonctionnement du véhicule satisfait une condition prédéterminée,
en mode mains libres, quand le conducteur est tourné vers l'avant après l'envoi au conducteur de l'alerte de regard vers l'avant, le mode mains libres est maintenu, et quand le conducteur n'est pas tourné vers l'avant, un avertissement de conduite manuelle secondaire est envoyé pour inciter le conducteur à actionner le volant, et si le conducteur garde les mains sur le volant après l'envoi de l'avertissement de conduite manuelle secondaire, la circulation en conduite autonome est poursuivie dans le mode de conduite manuelle.
